# EUROPEAN PATENT SPECIFICATION

(11) **EP 2 388 297 B1**
(45) Date of publication and mention of the grant of the patent: **19.08.2020**
(21) Application number: 10731157.3
(22) Date of filing: 14.01.2010
(51) Int. Cl.: C08L 101/10, C08K 5/04, C08K 5/31, C08L 23/26, C08L 33/14, C08L 71/02, C09J 11/06, C09J 133/14, C09J 143/04, C09J 171/02, C09J 183/12, C09J 201/10, C09K 3/10

(54) **CURABLE COMPOSITION AND CURED OBJECT FORMED THEREFROM**
HÄRTBARE ZUSAMMENSETZUNG UND DARAUS GEFORMTES GEHÄRTETES PRODUKT
COMPOSITION DURCISSABLE ET OBJET DURCI FORMÉ À PARTIR DE CELLE-CI

(30) Priority: 16.01.2009 JP 2009007762
(43) Date of publication of application: 23.11.2011
(73) Proprietor: KANEKA CORPORATION, Osaka (JP)
(72) Inventor: NORO, Noriko, Takasago-shi Hyogo 676-8688 (JP); OKAI, Jiro, Settsu-shi Osaka 566-0072 (JP); YANO, Ayako, Takasago-shi Hyogo 676-8688 (JP)
(74) Representative: Cabinet Beau de Loménie
(86) International application number: PCT/JP2010/000165
(87) International publication number: WO 2010/082488

(56) References cited:
- EP-A1- 1 985 666
- WO-A1-2007/094273
- WO-A1-2007/094276
- JP-A- 2007 302 774
- JP-A- 2007 302 774

## Description

### TECHNICAL FIELD

The present invention relates to a curable composition comprising one or more organic polymers having a silicon-containing group which has a hydroxy group or hydrolyzable group bonded to a silicon atom and can form a siloxane bond to be cross-linked (hereinafter referred to also as a "reactive silyl group").

### BACKGROUND ART

Organic polymers containing at least one reactive silyl group in each molecule are known to have properties such that they are cross-linked by siloxane bond formation involving reactions such as hydrolysis of the reactive silyl group due to moisture or the like even at room temperature, and thereby provide rubbery cured products.

Among these reactive silyl group-containing polymers, those polymers which have a main chain skeleton of a polyoxyalkylene polymer or a polyisobutylene polymer are disclosed in Patent Documents 1 and 2, and the like. These polymers have already been industrially produced and used in various applications such as sealants, adhesives, and coatings.

Curable compositions containing these reactive silyl group-containing organic polymers further contain a curing catalyst in order to provide cured products. Common examples of the curing catalyst include organotin curing catalysts having a carbon-tin bond, such as dibutyltin bis(acetylacetonate) and dibutyltin dilaurate. In recent years, however, organotin compounds are known to be toxic, and the development of non-organotin curing catalysts has been desired.

Patent Documents 3, 4, 5, 6, and 7 disclose tin carboxylates and other metal carboxylates as curing catalysts. These documents also disclose that addition of an amine compound as a promoter to such a curing catalyst improves the curability of a curable composition to be provided. In consideration of environmental load, a curing catalyst containing substantially no metal is also desired. Patent Document 8 discloses that combination use of an amine compound and a carboxylic acid provides a metal-free curing catalyst.

As above, the combination use of an amine compound and another curing catalyst is a known technique to improve the curability of a curable composition to be provided. However, in the case of using the non-organotin curing catalysts disclosed in the above Patent Documents, the adhesiveness of the curable composition to be provided needs to be further improved compared to the case of using organotin curing catalysts.

There are very few documents disclosing an example that an amine compound is solely used as a curing catalyst. Although Patent Document 9 discloses a technique with use of a biguanide compound, which is one of amine compounds, as a curing catalyst, it has a problem that the curable composition may not show practical curability.

Patent Documents 10 and 11 each disclose a technique in which a highly active reactive silyl group is used in combination so that the above curability problem is solved. Further, Patent Document 12 teaches that a guanidine compound having a specific structure has specifically high catalytic activity and provides a curable composition with good adhesiveness. However, those biguanide compounds and guanidine compounds have a problem that the resulting cured products have yellowing on the surface after a long time, compared with the case of using commonly used organotin curing catalysts.

Meanwhile, Patent Document 13 discloses a technique of using a specific amount of a carboxylic acid in combination in the curable composition containing an amidine compound including the biguanide compound so that various properties such as curability and adhesiveness are enhanced. When the amount of the carboxylic acid is too much or too little for the amount of the amidine compound, the curable composition may disadvantageously have insufficient curability. In addition, the resulting cured product of the curable composition containing the carboxylic acid disadvantageously has yellowing on the surface after a long time.

Patent document 14 shows a curable composition comprising a silicon-containing group having organic polymer capable of forming siloxane bonds to cross link and an amidine compound having a melting point of < 23 °C and a molecular weight of ≥ 160 as a silanol condensation catalyst.

Patent Document 1: JP-A S52-73998
Patent Document 2: JP-A S63-6041
Patent Document 3: JP-A H5-39428
Patent Document 4: JP-A H9-12860
Patent Document 5: JP-A 2000-313814
Patent Document 6: JP-A 2000-345054
Patent Document 7: JP-A 2003-206410
Patent Document 8: JP-A H5-117519
Patent Document 9: JP-A 2005-248175
Patent Document 10: EP 1 985 666 A1
Patent Document 11: WO 2007/094275
Patent Document 12: WO 2007/094276
Patent Document 13: WO 2007/094273
Patent Document 14: JP-A 2007-302774

### SUMMARY OF THE INVENTION

The present invention aims to provide a curable composition containing a reactive silyl group-containing organic polymer, which exhibits excellent curability without containing a toxic organotin compound as a curing catalyst and gives a cured product that does not have discoloration even after being exposed to the atmosphere and ultraviolet light for a long time.

In the case that an amidine compound is used as a curing catalyst for a reactive silyl group-containing organic polymer, its use in combination with a chelating agent having a carbonyl group and/or a salt thereof prevents lowering of curability which is an important property of the curable composition and also prevents discoloration of the cured product even after the cured product is exposed to the atmosphere and ultraviolet light for a long time.

Specifically, the present invention is defined in the claims.

The curable composition of the present invention is excellent in environmental suitability because it is free from organotin compounds known to be toxic according to recent studies. Combination use of a carbonyl group-containing chelating agent and/or its salt with an amidine compound allows maintenance of good curability of the curable composition and prevents problems such as discoloration of the resulting cured product.

### BEST MODES FOR CARRYING OUT THE INVENTION

The following will describe the present invention in detail.

The curable composition of the present invention essentially comprises a reactive silyl group-containing organic polymer as the component (A). The organic polymer as the component (A) has one or more reactive silyl groups per molecule on average. Here, the reactive silyl group is an organic group having a hydroxy group or hydrolyzable group bonded to a silicon atom.

The component (A) forms a siloxane bond owing to a reaction accelerated by a curing catalyst and is thereby crosslinked.

Examples of the reactive silyl group include groups represented by formula (3):

-SiR³₃₋ₐXₐ (3)

wherein each of (3-a) R³s independently represents at least one selected from the group consisting of a C1-C20 alkyl group, a C6-C20 aryl group, a C7-C20 aralkyl group, and a triorganosiloxy group represented by -OSi(R')₃ (wherein each of the R's independently represents a C1-C20 hydrocarbon group); each of the a Xs independently represents a hydroxy group or a hydrolyzable group; and a is an integer of 1 to 3.

The hydrolyzable group represented by X in formula (3) is not particularly limited, and may be any conventionally known hydrolyzable group. Examples thereof include a hydrogen atom, a halogen atom, an alkoxy group, an acyloxy group, a ketoxymate group, an amino group, an amide group, an acid amide group, an aminooxy group, a mercapto group, and an alkenyloxy group. Preferable among these are a hydrogen atom, an alkoxy group, an acyloxy group, a ketoxymate group, an amino group, an amide group, an aminooxy group, a mercapto group, and an alkenyloxy group. More preferable is an alkoxy group because it contributes to mild hydrolysis and easy handling.

One silicon atom can have one to three groups selected from a hydrolyzable group or a hydroxy group bonded thereto. In the case that two or more groups selected from a hydrolyzable group or a hydroxy group are bonded to a silicon atom in the reactive silyl group, these groups may be the same as or different from each other.

R³ in formula (3) is not particularly limited. Examples thereof include: alkyl groups such as a methyl group and an ethyl group; cycloalkyl groups such as a cyclohexyl group; aryl groups such as a phenyl group; and aralkyl groups such as a benzyl group. Preferable among these is a methyl group.

The reactive silyl group of formula (3) is not particularly limited. Examples thereof include a trimethoxysilyl group, a triethoxysilyl group, a triisopropoxysilyl group, a dimethoxymethylsilyl group, a diethoxymethylsilyl group, a diisopropoxymethylsilyl group, a methoxydimethylsilyl group, and an ethoxydimethylsilyl group. Preferable among these is a dimethoxymethylsilyl group because it gives good curability and storage stability to the curable composition. A triethoxysilyl group and a diethoxymethylsilyl group are preferable and a triethoxysilyl group is more preferable in that an alcohol produced through hydrolysis of such a reactive silyl group is ethanol which is a highly safe alcohol.

As it is highly active and gives fine curability, the reactive silyl group of formula (3) is preferably a reactive silyl group represented by formula (1):

-SiX₃ (1)

wherein each X represents a hydroxy or hydrolyzable group and three Xs may be the same as or different from each other. Moreover, a trimethoxysilyl group and a triethoxysilyl group are more preferable, and a trimethoxysilyl group is particularly preferable.

The reactive silyl group may be introduced by any method including conventionally known methods. Examples thereof include the following methods (i) to (iii).
(i) A polymer having a functional group such as a hydroxy group in each molecule is allowed to react with an organic compound having an unsaturated group and an active group that is reactive with the functional group to provide an unsaturated group-containing polymer. Alternatively, the functional group-containing polymer is allowed to copolymerize with an unsaturated group-containing epoxy compound to provide an unsaturated group-containing polymer. Then, the reaction product is allowed to react with a reactive silyl group-containing hydrosilane for hydrosilylation.
(ii) The unsaturated group-containing organic polymer provided through the same manner as in the method (i) is allowed to react with a compound having a mercapto group and a reactive silyl group.
(iii) An organic polymer having a functional group such as a hydroxy group, an epoxy group or an isocyanate group in each molecule is allowed to react with a compound having a reactive silyl group and a functional group that is reactive with the former functional group.

Preferable among these is the method (i) or the method (iii) in such a mode that a hydroxy-terminated polymer is allowed to react with a compound having an isocyanate group and a reactive silyl group because such methods achieve a high conversion rate in a relatively short period of time. More preferable is the method (i). This is because the curable composition mainly comprising the reactive silyl group-containing organic polymer produced by the method (i) is likely to have a lower viscosity than the curable composition mainly comprising the organic polymer produced by the method (iii), and thus has better workability; and the organic polymer produced by the method (ii) has a stronger odor due to mercaptosilane than the organic polymer produced by the method (i).

The hydrosilane compound to be used in the method (i) is not particularly limited. Examples thereof include: halogenated hydrosilanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, phenyldimethoxysilane, and 1-[2-(trimethoxysilyl)ethyl]-1,1,3,3-tetramethyldisiloxane; acyloxyhydrosilanes such as methyldiacetoxysilane and phenyldiacetoxysilane; and ketoxymatehydrosilanes such as bis(dimethylketoxymate)methylsilane and bis(cyclohexylketoxymate)methylsilane. In particular, halogenated hydrosilanes and alkoxyhydrosilanes are preferable. More preferable are alkoxyhydrosilanes because the curable composition mainly comprising the organic polymer to be provided therefrom is mildly hydrolyzed and is easy to handle. Preferable among the alkoxyhydrosilanes is methyldimethoxysilane because it is easily available and gives excellent properties (such as curability, storage stability, elongation property, and tensile strength) to the curable composition mainly comprising the organic polymer to be provided and its cured product.

The synthesis method (ii) is not particularly limited. Examples thereof include a method in which a mercapto group- and reactive silyl group-containing compound is introduced into an unsaturated-bond moiety of the organic polymer by radical addition reaction in the presence of a radical initiator and/or a radical generation source. The mercapto group- and reactive silyl group-containing compound is not particularly limited. Examples thereof include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, and mercaptomethyltriethoxysilane.

The synthesis method (iii) in which a hydroxy-terminated polymer is allowed to react with an isocyanate group- and reactive silyl group-containing compound is not particularly limited. Examples thereof include a method as disclosed in JP-A H3-47825. The isocyanate group- and reactive silyl group-containing compound is not particularly limited. Examples thereof include: γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, and isocyanatomethyldiethoxymethylsilane.

In the case of a silane compound in which three hydrolyzable groups are bonded to one silicon atom, such as trimethoxysilane, disproportionation may rapidly proceed in some cases. As the disproportionation proceeds, dangerous compounds such as dimethoxysilane may be generated.

In the case of γ-mercaptopropyltrimethoxysilane and γ-isocyanatopropyltrimethoxysilane, however, such disproportionation will not proceed. Thus, the synthesis method (ii) or (iii) is preferable in the case that a group in which three hydrolyzable groups are bonded to one silicon atom, such as a trimethoxysilyl group, is used as the silyl group.

The disproportionation will not proceed in the case of a silane compound represented by formula (4):

H-(SiR⁴₂O)ₙSiR⁴₂-R⁵-SiX₃ (4)

wherein three Xs are as defined in formulas (1) and (3), each of (2n + 2) R⁴s is independently a hydrocarbon group, R⁵ is a divalent organic group, and n is an integer from 0 to 19. Thus, the silane compound represented by formula (4) is preferably used in the case of introducing a group in which three hydrolyzable groups are bonded to one silicon atom by the synthesis method (i).

R⁴ in formula (4) is not particularly limited as long as it is a hydrocarbon group. In particular, C1-C20 hydrocarbon groups are preferable, C1-C8 hydrocarbon groups are more preferable, and C1-C4 hydrocarbon groups are particularly preferable for easy availability and low cost.

R⁵ in formula (4) is not particularly limited as long as it is a divalent organic group. In particular, C1-C12 divalent hydrocarbon groups are preferable, C2-C8 divalent hydrocarbon groups are more preferable, and C2 divalent hydrocarbon groups are particularly preferable for easy availability and low cost.

The symbol n in formula (4) is an integer of 0 to 19, and in particular is preferably 1 for easy availability and low cost.

Examples of the silane compound represented by formula (4) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The reactive silyl group-containing organic polymer (A) may have a linear or branched structure in a molecule. The number-average molecular weight thereof is preferably 500 to 100,000, more preferably 1,000 to 50,000, and particularly preferably 3,000 to 30,000 as determined by GPC and expressed on the polystyrene equivalent basis. If the number-average molecular weight is lower than 500, the cured product to be provided is likely to be poor in elongation property. If it is higher than 100,000, the curable composition to be provided is likely to have a high viscosity and be poor in workability.

The organic polymer (A) preferably has one or more reactive silyl groups, and more preferably has 1.1 to 5 reactive silyl groups per molecule on average. If the organic polymer (A) has less than one reactive silyl group per molecule on average, the curable composition is likely to have poor curability, and the cured product to be provided is less likely to show a good rubber elastic behavior.

The reactive silyl group may be located at a main chain end or at a side chain end, or at both ends. Particularly in the case that the reactive silyl group is located only at a main chain end, the organic polymer component in the cured product to be provided has an increased effective network size. Thus, a rubber-like cured product having high strength, high elongation, and low elastic modulus is likely to be provided.

The curable composition of the present invention, which mainly comprises the reactive silyl group-containing organic polymer, is more compatible with the amidine compound as the component (B) serving as a curing catalyst in comparison with one mainly comprising an inorganic polymer such as polydimethylsiloxane, and thereby has excellent curability and adhesiveness.

For the similar reason, the main chain skeleton of the organic polymer as the component (A) preferably comprises at least one selected from a hydrogen atom, a carbon atom, a nitrogen atom, an oxygen atom, and a sulfur atom.

The main chain skeleton of the organic polymer is not particularly limited, and examples thereof include: polyoxyalkylene polymers such as polyoxyethylene, polyoxypropylene, polyoxybutylene, polyoxytetramethylene, polyoxyethylene-polyoxypropylene copolymers, and polyoxypropylene-polyoxybutylene copolymers; hydrocarbon polymers such as ethylene-propylene copolymers, polyisobutylene, copolymers of isobutylene and isoprene or a like monomer, polychloroprene, polyisoprene, copolymers of isoprene or butadiene with acrylonitrile and/or styrene or a like monomer, polybutadiene, and copolymers of isoprene or butadiene with acrylonitrile and styrene or a like monomer, and hydrogenated polyolefin polymers derived from hydrogenation of these polyolefin polymers; polyester polymers produced by condensation of a dibasic acid such as adipic acid and a glycol, and produced by ring-opening polymerization of lactones; (meth)acrylate ester polymers produced by radical polymerization of compounds such as ethyl (meth)acrylate and butyl (meth)acrylate; vinyl polymers produced by radical polymerization of compounds such as (meth)acrylate ester compounds, vinyl acetate, acrylonitrile, and styrene; graft polymers produced by polymerizing a vinyl compound in any of the polymers mentioned above; polysulfide polymers; polyamide polymers such as polyamide 6 produced by ring-opening polymerization of ε-caprolactam, polyamide 6-6 produced by polycondensation of hexamethylenediamine and adipic acid, polyamide 6.10 produced by polycondensation of hexamethylenediamine and sebacic acid, polyamide 11 produced by polycondensation of ε-aminoundecanoic acid, polyamide 12 produced by ring-opening polymerization of ε-aminolaurolactam, and copolymer polyamides containing multiple species of the aforementioned polyamides; polycarbonate polymers such as polycarbonates produced by polycondensation of bisphenol A and carbonyl chloride; diallyl phthalate polymers; and other organic polymers.

Preferable among these are saturated hydrocarbon polymers such as polyisobutylene, hydrogenated polyisoprene, and hydrogenated polybutadiene; polyoxyalkylene polymers; and (meth)acrylate ester polymers. This is because the organic polymer having such a main chain skeleton has a relatively low glass transition temperature and the cured product to be provided is allowed to have excellent cold resistance.

The glass transition temperature of the organic polymer as the component (A) is not particularly limited. It is preferably 20°C or lower, more preferably 0°C or lower, and particularly preferably -20°C or lower. If the glass transition temperature is higher than 20°C, the curable composition may have a high viscosity in winter or in cold districts, and thus the workability is likely to be poor. In addition, the cured product to be provided is likely to have deteriorated flexibility and thus have poor elongation.

The glass transition temperature may be determined by the DSC measurement in accordance with the method in JIS K 7121.

A curable composition mainly comprising an organic polymer whose main chain skeleton is a saturated hydrocarbon polymer, a polyoxyalkylene polymer, or a (meth)acrylate ester polymer is more preferable because when the curable composition is used as an adhesive or sealant, low-molecular-weight components are less likely to transfer to (i.e. stain) adherends.

An organic polymer whose main chain skeleton is a polyoxyalkylene polymer or a (meth)acrylate ester polymer is particularly preferable because such an organic polymer has high moisture permeability, and is excellent in depth curability and provides a cured product excellent in adhesiveness when used as a main component of a one-pack type adhesive or sealant. Most preferable is an organic polymer whose main chain skeleton is a polyoxyalkylene polymer.

The polyoxyalkylene polymer to be used as the main chain skeleton of the organic polymer as the component (A) is a polymer having a repeating unit represented by formula (5) :

-R⁶-O- (5)

wherein R⁶ is a C1-C14 linear or branched alkylene group.

R⁶ in formula (5) is not particularly limited as long as it is a C1-C14 linear or branched alkylene group. In particular, a C2-C4 linear or branched alkylene group is preferable.

The repeating unit defined by formula (5) is not particularly limited. Examples thereof include: -CH₂O-,-CH₂CH₂O-, -CH₂CH (CH₃) O-, -CH₂CH(C₂H₅)O-, -CH₂C(CH₃)₂O-, and-CH₂CH₂CH₂CH₂O-.

The polyoxyalkylene polymer may have one repeating unit or multiple repeating units. In applications such as sealants, in particular, the organic polymer preferably mainly contains a propylene oxide polymer as the main chain skeleton because such an organic polymer is noncrystalline and has a relatively low viscosity.

The polyoxyalkylene polymer may be produced by any method including conventionally known methods. Examples thereof include: a method with an alkali catalyst such as KOH; a method in which a transition metal compound-porphyrin complex, such as a complex produced by the reaction between an organoaluminum compound and porphyrin, is used as a catalyst, as disclosed in JP-A S61-215623; methods in which a double metal cyanide complex is used as a catalyst, as disclosed in JP-B S46-27250, JP-B S59-15336, US 3278457, US 3278458, US 3278459, US 3427256, US 3427334, US 3427335 and other documents; a method in which a polyphosphazene salt is used as a catalyst, as disclosed in JP-A H10-273512; and a method in which a phosphazene compound is used as a catalyst, as disclosed in JP-A H11-060722.

A reactive silyl group-containing polyoxyalkylene polymer may be produced by any method including conventionally known methods. Examples thereof include: methods disclosed in JP-B S45-36319, JP-B S46-12154, JP-A S50-156599, JP-A S54-6096, JP-A S55-13767, JP-A S55-13468, JP-A S57-164123, JP-B H3-2450, US 3632557, US 4345053, US 4366307, US 4960844 and other documents; and methods providing a polymer with a high molecular weight (number-average molecular weight of 6,000 or higher) and a narrow molecular weight distribution (Mw/Mn of 1.6 or below) as disclosed in JP-A S61-197631, JP-A S61-215622, JP-A S61-215623, JP-A S61-218632, JP-A H3-72527, JP-A H3-47825, JP-A H8-231707 and other documents.

The reactive silyl group-containing polyoxyalkylene polymers may be added alone or may be added in combination to the curable composition.

The saturated hydrocarbon polymer to be used as the main chain skeleton of the organic polymer as the component (A) is a polymer that is substantially free from any carbon-carbon unsaturated bond except an aromatic ring in each molecule. Such a polymer is excellent in heat resistance, weather resistance, durability, and moisture barrier property.

The saturated hydrocarbon polymer is not particularly limited. Examples thereof include: (i) polymers comprising a C2-C6 olefin compound, such as ethylene, propylene, 1-butene, or isobutylene, as a repeating unit; (ii) polymers comprising a diene compound, such as butadiene or isoprene, as a repeating unit; and (iii) polymers produced for example by copolymerization of the aforementioned diene compound and olefin compound, and then hydrogenation of the produced copolymer. In particular, isobutylene polymers and hydrogenated polybutadiene polymers are preferable because, for example, functional groups are easily introduced into the ends of these polymers, their molecular weights are easily controlled, and the number of terminal functional groups can be adjusted. More preferable are isobutylene polymers.

The isobutylene polymers may be ones in which all of the repeating units are derived from isobutylene or may be copolymers of isobutylene with other compounds. In the case that an isobutylene copolymer is used as the main chain skeleton, the polymer preferably has 50% by weight or more, more preferably 80% by weight or more, and particularly preferably 90 to 99% by weight, of an isobutylene-derived repeating unit per molecule because the cured product to be provided has excellent rubber properties.

The saturated hydrocarbon polymer may be produced by any method including conventionally known polymerization methods. Particularly preferable is the living polymerization method which has been remarkably developed in recent years. Examples of the method for producing an isobutylene polymer by the living polymerization include the inifer polymerization found by Kennedy et al. (J. P. Kennedy et al., J. Polymer Sci., Polymer Chem. Ed., 1997, vol. 15, p. 2843).

This polymerization method is known to enable introduction of various functional groups into molecular ends and provide isobutylene polymers having a molecular weight of about 500 to 100,000 with a molecular weight distribution of not broader than 1.5.

A reactive silyl group-containing saturated hydrocarbon polymer may be produced by any method including conventionally known methods. Examples thereof include methods disclosed in JP-B H4-69659, JP-B H7-108928, JP-A S63-254149, JP-A S64-22904, JP-A H1-197509, JP-B 2539445, JP-B 2873395, JP-A H7-53882 and other documents.

The reactive silyl group-containing saturated hydrocarbon polymers may be added alone, or may be added in combination to the curable composition.

The (meth)acrylate ester polymer to be used as the main chain skeleton of the organic polymer (A) is a polymer comprising a (meth)acrylate compound as a repeating unit. The term "(meth)acrylate" herein refers to an acrylic acid ester and/or a methacrylic acid ester, and has the same meaning also in the following description.

The (meth)acrylate compound to be used as a repeating unit is not particularly limited. Examples thereof include: (meth)acrylic acid compounds such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, γ-(methacryloyloxy)propyltrimethoxysilane, γ-(methacryloyloxy)propyldimethoxymethylsilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The (meth)acrylate ester polymers include copolymers of a (meth)acrylate compound and a vinyl compound copolymerizable therewith.

The vinyl compound is not particularly limited. Examples thereof include: styrene compounds such as styrene, vinyltoluene, α-methylstyrene, chlorostyrene, and styrenesulfonic acid and salts thereof; silyl group-containing vinyl compounds such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide compounds such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl compounds such as acrylonitrile and methacrylonitrile; amide group-containing vinyl compounds such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, allyl alcohol, and the like. Two or more of these may be used in combination as comonomers.

Preferable among the (meth)acrylate ester polymers produced from the aforementioned compounds are organic polymers comprising, as the main chain skeleton, a copolymer of a styrene compound and a (meth)acrylate compound because the curable composition containing such an organic polymer provides a cured product having excellent physical properties; more preferable are organic polymers comprising, as the main chain skeleton, a copolymer of an acrylate compound and a methacrylate compound; and particularly preferable are organic polymers comprising, as the main chain skeleton, a polymer of an acrylate compound.

For applications such as general architectural applications, the curable composition is required to have a low viscosity, and the cured product to be provided therefrom is required to have a low modulus, high elongation, high weather resistance, and high heat resistance, in particular.

In order to satisfy these requirements, the main chain skeleton of the organic polymer more preferably comprises a polymer derived from a butyl acrylate compound.

For applications such as automobile applications, the cured product to be provided is required to be excellent in properties such as oil resistance.

In order to provide the cured product having excellent oil resistance, the main chain skeleton of the organic polymer more preferably comprises a copolymer mainly derived from ethyl acrylate.

In the case that the curable composition comprises the organic polymer comprising, as the main chain skeleton, such a copolymer mainly derived from ethyl acrylate, the cured product to be provided is likely to have slightly poor low-temperature properties (cold resistance) while having excellent oil resistance. In order to improve the low-temperature properties, some ethyl acrylate monomers may be replaced with butyl acrylate monomers. As the proportion of butyl acrylate is increased, however, the good oil resistance is likely to be impaired. Thus, the proportion thereof is preferably 40% or lower, and more preferably 30% or lower, in the applications requiring good oil resistance.

In order to improve properties such as the low-temperature properties without impairment of the oil resistance, it is also preferable to use, as a comonomer, a compound such as 2-methoxyethyl acrylate or 2-ethoxyethyl acrylate in which an oxygen atom is introduced in the side chain alkyl group.

Here, the cured product to be provided is likely to have poor heat resistance due to introduction of an alkoxy group having an ether bond in the side chain. Thus, the proportion of such a compound is preferably 40% or lower in the applications requiring good heat resistance.

As mentioned above, the organic polymer comprising, as the main chain skeleton, a copolymer mainly derived from ethyl acrylate can be optimized by appropriately selecting comonomers and adjusting the proportion thereof in consideration of physical properties required for the cured product to be provided, such as oil resistance, heat resistance, and low-temperature properties, according to various uses and requirements. For example, without any limitative meaning, copolymers of ethyl acrylate, butyl acrylate, and 2-methoxyethyl acrylate (weight ratio: 40-50/20-30/30-20) have an excellent balance of physical properties including oil resistance, heat resistance, and low-temperature properties.

In the present invention, these preferable compounds may be copolymerized or even block-copolymerized with another compound. In such a case, a copolymer to be produced preferably contains these preferable compounds in an amount of 40% by weight or more.

The (meth)acrylate ester polymer may be produced by any method including conventionally known methods. Particularly preferable is the living radical polymerization because, for example, this method enables cross-linkable functional groups to be easily introduced in a high proportion into molecular chain ends and provides a polymer having a narrow molecular weight distribution and a low viscosity.

Here, ordinary free radical polymerization, in which a compound such as an azo compound or a peroxide is used as a polymerization initiator, is likely to provide a polymer generally having a molecular weight distribution value as high as not lower than 2 and a higher viscosity.

More preferable for producing a (meth)acrylate ester polymer containing a specific functional group among the methods for producing (meth)acrylate ester polymers by the aforementioned "living radical polymerization" is the "atom transfer radical polymerization" in which a substance such as an organic halide or sulfonyl halide compound is used as an initiator and a transition metal complex is used as a catalyst. One reason for this is that the atom transfer radical polymerization has the features of the "living radical polymerization", that is, providing a polymer with a narrow molecular weight distribution and a low viscosity. Other reasons include that the atom transfer radical polymerization gives a high degree of freedom in selecting an initiator and a catalyst, and provides a polymer terminally having a halogen or the like group which is relatively advantageous to functional-group exchange reactions. Examples of the atom transfer radical polymerization include the method described in Matyjaszewski et al., Journal of the American Chemical Society (J. Am. Chem. Soc.), 1995, vol. 117, p. 5614.

A reactive silyl group-containing (meth)acrylate ester polymer may be produced by any method. Examples thereof include the free radical polymerization with a chain transfer agent, as disclosed in JP-B H3-14068, JP-B H4-55444, JP-A H6-211922, and other documents; and the atom transfer radical polymerization as disclosed in JP-A H9-272714 and other documents.

A (meth)acrylate copolymer derived from multiple species of the aforementioned (meth)acrylate compounds may be used as the main chain skeleton of the organic polymer (A) .

Specific examples of the (meth)acrylate copolymer derived from multiple species of the (meth)acrylate compounds include copolymers whose main chain skeleton substantially comprises:
a repeating unit having a C1-C8 alkyl group represented by formula (6):

   -CH₂-C(R⁷)(COOR⁸)- (6)

   wherein R⁷ is a hydrogen atom or a methyl group, and R⁸ is a C1-C8 alkyl group; and
a repeating unit having an alkyl group containing 9 or more carbon atoms represented by formula (7):

   -CH₂-C(R⁷)(COOR⁹)- (7)

   wherein R⁷ is as defined in formula (6), and R⁹ is an alkyl group containing 9 or more carbon atoms.

R⁸ in formula (6) is not particularly limited as long as it is a C1-C8 alkyl group. Examples thereof include a methyl group, an ethyl group, a propyl group, an n-butyl group, a t-butyl group, and a 2-ethylhexyl group. Preferable among these are C1-C4 alkyl groups, and more preferable are C1 and C2 alkyl groups. R⁸ in the copolymer is not necessarily limited to one alkyl group species.

R⁹ in formula (7) is not particularly limited as long as it is an alkyl group containing 9 or more carbon atoms. Examples thereof include a lauryl group, a tridecyl group, a cetyl group, a stearyl group, and a behenyl group. Preferable among these are C10-C30 alkyl groups and more preferable are C10-C20 long-chain alkyl groups. R⁹ in the copolymer is not necessarily limited to one alkyl group species.

The (meth)acrylate copolymer substantially comprises the repeating units defined by formulas (6) and (7). The term "substantially" herein means that the total amount of the repeating units defined by formulas (6) and (7) in the copolymer is more than 50% by weight. The total amount of the repeating units defined by formulas (6) and (7) in the copolymer is preferably 70% by weight or more.

The ratio between the repeating units of formulas (6) and (7) in the copolymer is preferably 95:5 to 40:60, and more preferably 90:10 to 60:40 in terms of the weight ratio (formula (6): formula (7)).

The (meth)acrylate copolymers include copolymers of (meth)acrylate compounds used as the repeating units defined by formulas (6) and (7) and a vinyl compound copolymerizable therewith.

Examples of the vinyl compound include: acrylic acids such as acrylic acid and methacrylic acid; amide group-containing compounds such as acrylamide, methacrylamide, N-methylolacrylamide, and N-methylolmethacrylamide; epoxy group-containing compounds such as glycidyl acrylate and glycidyl methacrylate; amino group-containing compounds such as diethylaminoethyl acrylate, diethylaminoethyl methacrylate, and aminoethyl vinyl ether; and other compounds such as acrylonitrile, styrene, α-methylstyrene, alkyl vinyl ethers, vinyl chloride, vinyl acetate, vinyl propionate, and ethylene.

The main chain skeleton of the organic polymer as the component (A) may contain, if necessary, another repeating unit having, for example, a urethane bond as long as the effects of the present invention are not significantly lessened thereby.

The urethane bond-containing repeating unit is not particularly limited. Examples thereof include a repeating unit having a group formed by reaction between an isocyanate group and an active hydrogen group (hereinafter, the group thus formed is also referred to as an "amide segment").

The amide segment is an organic group represented by formula (8):

-NR¹⁰-C(=O)- (8)

wherein R¹⁰ is a hydrogen atom or an organic group.

The amide segment is not particularly limited. Examples thereof include: a urethane group formed by reaction between an isocyanate group and a hydroxy group; a urea group formed by reaction between an isocyanate group and an amino group; and a thiourethane group formed by reaction between an isocyanate group and a mercapto group.

The definition of the "amide segment" herein also includes organic groups formed by the reactions of active hydrogen in a urethane group, a urea group, and a thiourethane group with isocyanate groups.

The reactive silyl group-containing organic polymer having an amide segment in the main chain skeleton may be produced by any method. Examples thereof include a method comprising the steps of: reacting an organic polymer having an active hydrogen-containing organic group at an end thereof with an excessive amount of a polyisocyanate compound to provide a polymer having an isocyanate group at a polyurethane main chain end; and, thereafter or simultaneously therewith, reacting all or part of the isocyanate groups in the polymer with a group W in a silicon compound represented by formula (9):

W-R¹¹-SiR³₃₋ₐXₐ (9)

wherein R³, X, and a are as defined in formula (3); R¹¹ is a divalent organic group, and more preferably a C1-C20 divalent hydrocarbon group; and W is a group containing at least one active hydrogen selected from the group consisting of a hydroxy group, a carboxyl group, a mercapto group, and a (primary or secondary) amino group. Such a method is disclosed in Patent Documents such as JP-B S46-12154 (US 3632557), JP-A S58-109529 (US 4374237), JP-A S62-13430 (US 4645816), JP-A H8-53528 (EP 0676403), JP-A H10-204144 (EP 0831108), JP-T 2003-508561 (US 6197912), JP-A H6-211879 (US 5364955), JP-A H10-53637 (US 5756751), JP-A H11-100427, JP-A 2000-169544, JP-A 2000-169545, JP-A 2002-212415, JP-B 3313360, US 4067844, US 3711445, and JP-A 2001-323040.

In addition, examples thereof further include a method comprising the step of reacting an active hydrogen-containing group at an end of an organic polymer with an isocyanate group of a reactive silyl group-containing isocyanate compound represented by formula (10):

O=C=N-R¹¹-SiR³₃₋ₐXₐ (10)

wherein R¹¹, R³, X, and a are as defined in formulas (3) and (9). Such a method is disclosed in Patent Documents such as JP-A H11-279249 (US 5990257), JP-A 2000-119365 (US 6046270), JP-A S58-29818 (US 4345053), JP-A H3-47825 (US 5068304), JP-A H11-60724, JP-A 2002-155145, JP-A 2002-249538, WO 03/018658, and WO 03/059981.

The organic polymer having an active hydrogen-containing group at an end thereof is not particularly limited. Examples thereof include hydroxy-terminated oxyalkylene polymers (polyether polyols), polyacrylic polyols, polyester polyols, hydroxy-terminated saturated hydrocarbon polymers (polyolefin polyols), polythiol compounds, and polyamine compounds.

In particular, organic polymers comprising a polyether polyol, a polyacrylic polyol, or a polyolefin polyol in the main chain skeleton are preferable because such polymers have a relatively low glass transition temperature and provide a cured product having excellent cold resistance.

Particularly preferable are organic polymers containing a polyether polyol because they have a low viscosity and good workability, and provide a cured product having good depth curability and adhesiveness. Also, the curable composition more preferably comprises an organic polymer containing a polyacrylic polyol or a saturated hydrocarbon polymer because such a curable composition provides a cured product having good weather resistance and heat resistance.

The polyether polyol preferably has at least 0.7 terminal hydroxy groups per molecule on average.

The production method thereof is not particularly limited and may be any conventionally known method. Examples thereof include: polymerization with an alkali metal catalyst; and polymerization of an alkylene oxide in which a polyhydroxy compound having at least two hydroxy groups per molecule is used as an initiator in the presence of a double metal cyanide complex or cesium.

Preferable among the aforementioned polymerization methods is the polymerization with a double metal cyanide complex because it provides a polymer having a low degree of unsaturation, a narrow molecular weight distribution (Mw/Mn), and a low viscosity, and the cured product to be provided is allowed to have excellent acid resistance and weather resistance.

The term "polyacrylic polyol" refers to a polyol containing a (meth)acrylic acid alkyl ester (co)polymer as the skeleton thereof and having a hydroxy group in the molecule.

The production method thereof is preferably the living radical polymerization, and more preferably the atom transfer radical polymerization because such methods provide polymers having a narrow molecular weight distribution and a lower viscosity. Also preferable is polymerization by the so-called SGO process in which an acrylic acid alkyl ester compound is continuously bulk-polymerized under high-temperature and high-pressure conditions, as disclosed in JP-A 2001-207157. Examples of the polyacrylic polyol include ARUFON UH-2000 produced by Toagosei Co., Ltd.

The polyisocyanate compound is not particularly limited. Examples thereof include: aromatic polyisocyanates such as toluene(tolylene)diisocyanate, diphenylmethane diisocyanate, and xylylene diisocyanate; and aliphatic polyisocyanates such as isophorone diisocyanate and hexamethylene diisocyanate.

The silicon compound of formula (9) is not particularly limited. Examples thereof include: amino group-containing silane compounds such as γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silane compounds such as γ-hydroxypropyltrimethoxysilane; and mercapto group-containing silane compounds such as γ-mercaptopropyltrimethoxysilane.

Examples of the silicon compound of formula (10) further include Michael addition products derived from various α,β-unsaturated carbonyl compounds and primary amino group-containing silane compounds, and Michael addition products derived from various (meth)acryloyl group-containing silane compounds and primary amino group-containing compounds. Such products are disclosed in JP-A H6-211879 (US 5364955), JP-A H10-53637 (US 5756751), JP-A H10-204144 (EP 0831108), JP-A 2000-169544, and JP-A 2000-169545.

The reactive silyl group-containing isocyanate compound of formula (10) is not particularly limited. Examples thereof include: γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, and diethoxymethylsilylmethyl isocyanate.

Examples of the reactive silyl group-containing isocyanate compound of formula (10) further include reaction products derived from the silicon compound of formula (9) and an excessive amount of a polyisocyanate compound, as disclosed in JP-A 2000-119365 (US 6046270).

The curable composition of the present invention essentially contains an amidine compound as the component (B) serving as a curing catalyst for the organic polymer as the component (A). In spite of being a non-organotin curing catalyst, the amidine compound used as a curing catalyst provides a curable composition excellent in curability.

The amidine compound as the component (B) has a melting point of preferably 23°C or higher, more preferably 40°C or higher, and particularly preferably 60°C or higher because the curable composition does not have a problem of bleeding out and has excellent adhesiveness. In the case that an amidine compound having a melting point of lower than 23°C is used as a curing catalyst, a liquid compound tends to bleed out on the surface of the cured product and the cured product tends to have poor adhesiveness. In contrast, an amidine compound having a melting point of 23°C or higher provides a curable composition not having a problem of bleeding out and having excellent adhesiveness.

Because of its high activity as a curing catalyst, the amidine compound as the component (B) is preferably a guanidine compound and more preferably a guanidine compound represented by formula (2):

R¹N=C(NR¹₂)₂ (2)

wherein any one of five R¹s is an organic group and each of the remaining four R¹s is independently a hydrogen atom, a saturated hydrocarbon group, -C(=NR²)-NR²₂ in which each of three R²s is independently a hydrogen atom or a saturated hydrocarbon group, or =C(-NR²₂)₂ in which each of four R²s is independently a hydrogen atom or a saturated hydrocarbon group.

Any one of five R¹s in formula (2) is an organic group. The organic group is not particularly limited, and examples thereof include a saturated or unsaturated hydrocarbon group; an organic group in which at least one hydrogen atom in a hydrocarbon group is substituted by a functional group containing at least one selected from a nitrogen atom, an oxygen atom, and a sulfur atom; an alkoxy group; a carboxy group; an acyl group; a carbonyl group; an amino group; an imino group; and a sulfonyl group.

The any one of five R¹s is preferably an aryl group as it provides a curable composition excellent in curability and adhesiveness. The aryl group is not particularly limited and examples thereof include a phenyl group, a 2-methylphenyl group, a 3-methylphenyl group, a 4-methylphenyl group, a 2,4-dimethylphenyl group, a 2,6-dimethylphenyl group, a 2,4,6-trimethylphenyl group, a 2-chlorophenyl group, a 3-chlorophenyl group, a 2,4-dichlorophenyl group, a 2,6-dichlorophenyl group, a 2-hydroxyphenyl group, a 4-hydroxyphenyl group, a 2-aminophenyl group, a 4-aminophenyl group, a 2,4-diaminophenyl group, a 4-(dimethylamino)phenyl group, a 4-nitrophenyl group, a 4-cyanophenyl group, a 4-sulfonatephenyl group, a 4-methoxyphenyl group, a 4-ethoxyphenyl group, a 4-benzyloxyphenyl group, a 4-phenoxyphenyl group, a 4-carboxyphenyl group, a 4-acetoxyphenyl group, a 4-benzoylphenyl group, a 4-(ethoxycarbonyl)phenyl group, a 4-(phenoxycarbonyl)phenyl group, a 4-guanidinophenyl group, a 2,4-diguanidinophenyl group, a 4-(acetylamino)phenyl group, a 4-(benzoylamino)phenyl group, a 4-(dimethylaminosulfonyl)phenyl group, a 2-methyl-4-methoxyphenyl group, a 2-methyl-4-nitrophenyl group, a 2-methoxy-4-guanidinophenyl group, a 2-methoxy-4-(acetylamino)phenyl group, a naphthyl group, and a biphenyl group.

Preferable among these are a phenyl group, a 2-methylphenyl group, a 3-methylphenyl group, a 4-methylphenyl group, a 4-aminophenyl group, and a 4-guanidinophenyl group, as guanidine compounds with these groups are easily available and the curable composition to be provided is excellent in curability and adhesiveness. Further, a phenyl group and a 2-methylphenyl group are more preferable.

As mentioned above, one aryl group is preferably present as a substituent in the guanidine compound. Here, the curability of the curable composition is likely to be lowered along with increase in the number of the substituted aryl groups. Accordingly, the number of the substituted aryl groups is preferably one.

Any four of the five R¹s in formula (2) are each independently a hydrogen atom, a saturated hydrocarbon group, -C(=NR²)-NR²₂, or =C(-NR²₂)₂.

Each of the any four of the five R¹s is preferably a hydrogen atom or a saturated hydrocarbon group, and more preferably a hydrogen atom. In the case that R¹ is a saturated hydrocarbon group, the saturated hydrocarbon group is not particularly limited. Examples thereof include: saturated hydrocarbon groups comprising only hydrogen atoms and carbon atoms; and saturated hydrocarbon groups in which at least one hydrogen atom is substituted by a functional group containing at least one selected from a nitrogen atom, an oxygen atom, and a sulfur atom. In the case that R¹ is a saturated hydrocarbon group, C1 to C20 saturated hydrocarbon groups are preferable, and C1 to C10 saturated hydrocarbon groups are more preferable for easy availability.

Any one of five R¹s is preferably -C(=NR²)-NR²₂ or =C(-NR²₂)₂ and more preferably -C(=NR²)-NR²₂ because the curable composition is provided with excellent adhesiveness. Each of R²s is independently a hydrogen atom or a saturated hydrocarbon group and preferably a hydrogen atom for easy availability of the guanidine compound.

Here, in the case that R¹ is represented by -C(=NR²)-NR²₂ or =C(-NR²₂)₂ as previously mentioned, the guanidine compound of formula (2) is referred to as a biguanide compound.

Moreover, the guanidine compound is preferably a cyclic guanidine compound in which any two or more of the five R¹s in formula (2) are bound to form a cyclic structure because the curable composition to be provided is excellent in curability. The guanidine compound is more preferably a bicyclic guanidine compound.

The carbon number of the amidine compound as the component (B) is preferably two or more, more preferably three or more, still more preferable six or more, and particularly preferably seven or more. If the carbon number is as small as less than two (small molecular weight), the compound has higher volatility which tends to cause poorer work environment. Here, though not necessarily determined, the upper limit of the carbon number of the amidine compound is commonly preferably 10,000 or less.

The molecular weight of the amidine compound is preferably 60 or more, more preferably 120 or more, and particularly preferably 130 or more for a similar reason as the reason mentioned above. Though not necessarily determined, the upper limit of the molecular weight is commonly preferably 100,000 or less.

The amidine compound as the component (B) is not particularly limited, and examples thereof include: imidazole compounds such as imidazole, 2-methylimidazole, and 2-ethyl-4-methylimidazole; amidine compounds such as 2-methyl-2-imidazoline, 2-ethyl-2-imidazoline, 2-n-propyl-2-imidazoline, 2-isopropyl-2-imidazoline, 2-n-octyl-2-imidazoline, 1-(1-aminoethyl)-2-octyl-2-imidazoline, 2-n-undecyl-2-imidazoline, 4-ethyl-2-undecyl-2-imidazoline, 2-cyclohexyl-2-imidazoline, 2-benzyl-2-imidazoline, 2-phenylimidazoline, 2-[(3,4-dichlorophenoxy)methyl]-2-imidazoline, 4,4-dimethyl-2-imidazoline, 4,4-diethyl-2-imidazoline, 4,5-dimethyl-2-imidazoline, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 1-isopropyl-2-methyl-1,4,5,6-tetrahydropyrimidine, 1-ethyl-2-n-propyl-1,4,5,6-tetrahydropyrimidine, 1-ethyl-2-isopropyl-1,4,5,6-tetrahydropyrimidine, 1,5-diazabicyclo[4.3.0]non-5-ene (DBN), 1,8-diazabicyclo[5.4.0]undec-7-ene (DBU), 6-dibutylamino-1,8-diaza-bicyclo[5.4.0]undec-7-ene (DBA-DBU), 6-hydroxyamino-1,8-diaza-bicyclo[5.4.0]undec-7-ene (DBU-OH); guanidine compounds such as guanidine, dicyandiamide, guanylthiourea, 1,1,2-trimethylguanidine, 1,2,3-trimethylguanidine, 1,1,3,3-tetramethylguanidine, 1,1,2,2,3-pentamethylguanidine, 2-ethyl-1,1,3,3-tetramethylguanidine, 1-n-butylguanidine, 1-benzylguanidine, 1,3-dibenzylguanidine, 1-benzyl-2,3-dimethylguanidine, 1-benzylaminoguanidine, 1-(benzyloxy)guanidine, 1-phenylguanidine, 1,3-diphenylguanidine, 1-(o-tolyl)guanidine, 1-(3-methylphenyl)guanidine, 1-(4-methylphenyl)guanidine, 1-(2-chlorophenyl)guanidine, 1-(4-chlorophenyl)guanidine, 1-(2,3-xylyl)guanidine, 1-(2,6-xylyl)guanidine, 1-(1-naphthyl)guanidine, 2-phenyl-1,3-dicyclohexylguanidine, 1-phenyl-1-methylguanidine, 1-(4-chlorophenyl)-3-(1-methylethyl)guadinide, 1-(4-methylphenyl)-3-octylguanidine, 1-(4-methoxyphenyl)guanidine, 1,1'-[4-(dodecyloxy)-m-phenylene]bisguanidine, 1-(4-nitrophenyl)guanidine, 4-guanidinobenzoic acid, 2-(phenylimino)imidazolidine, 2-(5,6,7,8-tetrahydronaphtalene-1-ylamino)-2-imidazoline, N-(2-imidazoline-2-yl)-2,3-xylidine, N-(2-imidazoline-2-yl)-1-naphthaleneamine, 1,1'-[methylenebis(p-phenylene)]bisguanidine, 1,5,7-triazabicyclo[4.4.0]-5-decene, 7-methyl-1,5,7-triazabicyclo[4.4.0]-5-decene, 7-n-propyl-1,5,7-triazabicyclo[4.4.0]-5-decene, 7-isopropyl-1,5,7-triazabicyclo[4.4.0]-5-decene, 7-n-butyl-1,5,7-triazabicyclo[4.4.0]-5-decene, 7-n-cyclohexyl-1,5,7-triazabicyclo[4.4.0]-5-decene, and 2,3,5,6-tetrahydro-3-phenyl-1H-imidazo[1,2-a]imidazole; and biguanide compounds such as biguanide, 1-methylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-benzylbiguanide, 1,5-ethylenebiguanide, 1-(3-methylphenyl)biguanide, 1-(4-methylphenyl)biguanide, 1-(2-chlorophenyl)biguanide, 1-(4-chlorophenyl)biguanide, 1-(2,3-xylyl)biguanide, 1-(2,6-xylyl)biguanide, 1-(1-naphthyl)biguanide, 1,3-diphenylbiguanide, 1,5-diphenylbiguanide, 1-phenyl-1-methylbiguanide, 1-(4-chlorophenyl)-5-(1-methylethyl)biguanide, 1-(4-methylphenyl)-5-octylbiguanide, 1-(4-methoxyphenyl)biguanide, 1-(3,4-dichlorophenyl)-5-(1-methylethyl)biguanide, 1,1'-hexamethylenebis[5-(4-chlorophenyl)biguanide], 2-guanidino-1H-benzoimidazole, 1-(4-nitrophenyl)biguanide, 1-benzylbiguanide, 1-(2-phenylethyl)biguanide, 3-(2-phenylethyl)biguanide, N,N-diamidinoaniline, 1,5-ethylenebiguanide, 1-morpholinobiguanide, 3-morpholinobiguanide, 1-(4-chlorobenzyloxy)biguanide, 1-n-butyl-N2-ethylbiguanide, 1,1'-ethylenebisbiguanide, 1-[3-(diethylamino)propyl]biguanide, 1-[3-(dibutylamino)propyl]biguanide, 1-(morpholinosulfonyl)benzylbiguanide, 1-(hydroxymethyl)biguanide, 1-(2-hydroxyethyl)biguanide, N',N''-dihexyl-3,12-diimino-2,4,11,13-tetraazatetradecanediamidine, 4-[3-(amidino)guanidino]benzenesulfonic acid, 1,2-diisopropyl-3-[bis(dimethylamino)methylene]guanidine, and 5-[3-(2,4,5-trichlorophenoxy)propoxy]-1-isopropylbiguanide.

These amidine compounds as the component (B) may be added alone, or may be added in combination to the curable composition.

Among the amidine compounds listed above, DBN, DBU, DBA-DBU, DBU-OH, 1-phenylguanidine, 1-(o-tolyl)guanidine, 1,5,7-triazabicyclo[4.4.0]dec-5-ene, 7-methyl-1,5,7-triazabicyclo[4.4.0]dec-5-ene, 1-phenylbiguanide, and 1-(o-tolyl)biguanide are preferable because, for example, they are easily available and have high catalytic activity. Further, DBN, DBU, 1-phenylguanidine, 1-(o-tolyl)guanidine, 1-phenylbiguanide, and 1-(o-tolyl)biguanide are more preferable.

In addition, among the amidine compounds listed above, guanidine compounds are preferable because the curable composition to be provided has excellent adhesiveness. Particularly, 1-phenylguanidine, 1-(o-tolyl)guanidine, 1-phenylbiguanide, and 1-(o-tolyl)biguanide are more preferable.

The amount of the amidine compound as the component (B) is preferably 0.001 to 20 parts by weight, more preferably 0.01 to 15 parts by weight, still more preferably 0.1 to 10 parts by weight, and particularly preferably 0.5 to 5 parts by weight, for each 100 parts by weight of the organic polymer as the component (A). An amount of 0.001 to 20 parts by weight of the amidine compound gives better curability to the curable composition, and allows the curable composition to cure in an appropriate time period, thereby providing excellent workability.

The curable composition of the present invention contains the amidine compound as the component (B) as a curing catalyst. Here, in order to enhance the catalytic activity of the amidine compound, a Lewis acid and/or a Lewis acid complex may be optionally used in combination. Such a combination use is effective particularly for applications in which an accelerated curing rate is desired for the curable composition. The combination use also has an advantage in that the amount of curing catalyst can be reduced.

Examples of the Lewis acid include, but are not particularly limited to, halogenated metals such as titanium chloride, tin chloride, zirconium chloride, aluminum chloride, iron chloride, zinc chloride, copper chloride, antimony chloride, gallium chloride, indium chloride, titanium bromide, tin bromide, zirconium bromide, aluminum bromide, iron bromide, zinc bromide, and copper bromide; boron halides such as boron trifluoride, boron trichloride, boron tribromide, and boron triiodide; and metal triflate compounds such as trimethylsilyl trifluoromethanesulfonate, scandium triflate, yttrium triflate, and zinc triflate.

Preferable among these Lewis acids are titanium chloride, tin chloride, zirconium chloride, aluminum chloride, iron chloride, and boron trifluoride, and more preferable are titanium chloride, zirconium chloride, iron chloride, and boron trifluoride because they are easily available and easily handled.

Examples of the Lewis acid complex include, but are not particularly limited to, complexes containing the above Lewis acids. More specific examples thereof include amine complexes, alcohol complexes, ether complexes, and water complexes, of Lewis acids.

Examples of amine compounds from which the amine complexes of Lewis acids are derived include, but are not particularly limited to, ammonia, monoethylamine, triethylamine, 1,8-diazabicyclo[5.4.0]undec-7-ene (DBU), pyridine, piperidine, aniline, morpholine, cyclohexylamine, n-butylamine, monoethanolamine, diethanolamine, and triethanolamine.

Examples of alcohols from which the alcohol complexes of Lewis acids are derived include, but are not particularly limited to, methanol, ethanol, propanol, n-butanol, isopropanol, and 2-butanol.

Examples of ethers from which the ether complexes of Lewis acids are derived include, but are not particularly limited to, dimethyl ether, diethyl ether, n-dibutyl ether, and tetrahydrofuran.

Preferable among those Lewis acid complexes are boron trifluoride-amine complexes, boron trifluoride-alcohol complexes, and boron trifluoride-ether complexes, more preferable are a boron trifluoride-ethylamine complex, a boron trifluoride-piperidine complex, a boron trifluoride-methanol complex, a boron trifluoride-ethanol complex, a boron trifluoride-diethyl ether complex, and a boron trifluoride-tetrahydrofuran complex, and particularly preferable is a boron trifluoride-diethyl ether complex because they are easily available and easily handled.

The blending amount of Lewis acid and/or Lewis acid complex is preferably 0.1 to 30 parts by weight, and more preferably 0.1 to 12 parts by weight, for each 100 parts by weight of the organic polymer as the component (A). The Lewis acid and/or Lewis acid complex in an amount of 0.1 to 30 parts by weight give excellent curability to the curable composition, and allow the curable composition to cure in an appropriate time period, thereby providing excellent workability.

The molar ratio of the amidine compound as the component (B) to the Lewis acid and/or Lewis acid complex in the curable composition is preferably 90:10 to 30:70, more preferably 80:20 to 40:60, and particularly preferably 70:30 to 50:50 because such ratios provide a large effect of suppressing stickiness on the surface of the cured product and give good adhesiveness to the curable composition to be provided.

The curable composition of the present invention comprises the amidine compound as the component (B) as a curing catalyst, and may further comprise other curing catalysts if necessary as long as they never inhibit the effects of the present invention.

The curing catalyst other than the amidine compound as the component (B) is not particularly limited. Examples thereof include: metal salts of carboxylic acids such as tin carboxylates, lead carboxylates, bismuth carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylates, and cerium carboxylates; titanium compounds such as tetrabutyl titanate, tetrapropyl titanate, titanium tetrakis(acetylacetonate), diisopropoxytitanium bis(acetylacetonate), and diisopropoxytitanium bis(ethylacetoacetate); organotin compounds such as dibutyltin dilaurate, dibutyltin maleate, dibutyltin phthalate, dibutyltin dioctanoate, dibutyltin bis (2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis(acetylacetonate), dibutyltin bis(ethylacetoacetonate), reaction products of dibutyltin oxide with silicate compounds, and reaction products of dibutyltin oxide and phthalate esters; aluminum compounds such as aluminum tris(acetylacetonate), aluminum tris(ethylacetoacetate), and diisopropoxyaluminum ethylacetoacetate; zirconium compounds such as zirconium tetrakis(acetylacetonate); metal alkoxides such as tetrabutoxyhafnium; organic acidic phosphate esters; organic sulfonic acids such as trifluoromethanesulfonic acid; and inorganic acids such as hydrochloric acid, phosphoric acid, and boronic acid.

These curing catalysts may be used with the amidine compound as the component (B) in expectation of an increase in catalytic activity and improvement in properties such as the depth curability, thin-layer curability and adhesiveness of the curable composition to be provided.

In the case that an organotin compound is used together, the toxicity of the curable composition is likely to increase as the amount of organotin compound is increased. Thus, the amount of organotin compound is preferably small. More specifically, the amount of organotin compound, calculated as a metal tin, is preferably 5 parts by weight or less, more preferably 0.5 parts by weight or less, and further preferably 0.05 parts by weight or less, for each 100 parts by weight of the organic polymer as the component (A). Most preferably, the curable composition is substantially free from any organotin compound.

For the aforementioned reason, the curable composition of the present invention is essentially a non-organotin curable composition. The term "non-organotin curable composition" herein is defined as one containing 50% by weight or less of an organotin compound based on the total amount of compounds serving as curing catalysts. The non-organotin curable composition contains organotin compound(s) in an amount of preferably 30% by weight or less, more preferably 10% by weight or less, and further preferably 1% by weight or less. Most preferably, the non-organotin curable composition is free from any organotin compound.

Also in the case that a metal compound other than organotins is used together, the amount thereof is preferably small in consideration of environmental load. More specifically, the amount is preferably 5 parts by weight or less, and more preferably 2 parts by weight or less, for each 100 parts by weight of the organic polymer as the component (A). Particularly preferably, the curable composition is free from any metal compound.

The curable composition of the present invention is preferably a non-organotin curable composition. For the similar reason as mentioned above, the curable composition of the present invention is more preferably a curable composition substantially free from tin compounds such as organotin compounds and tin carboxylates; further preferably a curable composition substantially free from organotin compounds and metal carboxylates; and particularly preferably a curable composition substantially free from the metal element-containing curing catalysts mentioned above, such as metal carboxylates, titanium compounds, organotin compounds, organoaluminum compounds, and zirconium compounds.

The curable composition of the present invention may contain a carboxylic acid as a promoter if necessary to the extent that the acid does not deteriorate the effects of the present invention.

The carboxylic acid used as a promoter is not particularly limited. Examples thereof include: straight-chain saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monoenoic unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid, and 10-undecenoic acid; polyenoic unsaturated fatty acids such as linoelaidic acid, linolic acid, 10,12-octadecadienoic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 1-methylbutyric acid, isobutyric acid, 2-ethylbutyric acid, isovaleric acid, tuberculostearic acid, pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, and versatic acid; triple bond-containing fatty acids such as propiolic acid, tariric acid, stearolic acid, crepenynic acid, xymenynic acid, and 7-hexadecynoic acid; alicyclic carboxylic acids such as naphthenic acid, malvalic acid, sterculic acid, hydnocarpic acid, chaulmoogric acid, gorlic acid, 1-methylcyclopentanecarboxylic acid, 1-methylcyclohexanecarboxylic acid, 2-methylbicyclo[2.2.1]-5-heptene-2-carboxylic acid, 1-adamantanecarboxylic acid, bicyclo[2.2.1]heptane-1-carboxylic acid, and bicyclo[2.2.2]octane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2,2-dimethyl-3-hydroxypropionic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinolic acid, camlolenic acid, licanic acid, pheronic acid, cerebronic acid, and 2-methyl-7-oxabicyclo[2.2.1]-5-heptene-2-carboxylic acid; and halogen-substituted products of monocarboxylic acids such as chloroacetic acid, 2-chloroacrylic acid, and chlorobenzoic acid.

Examples of an aliphatic dicarboxylic acid include: saturated dicarboxylic acids such as adipic acid, azelaic acid, pimelic acid, suberic acid, sebacic acid, ethylmalonic acid, glutaric acid, oxalic acid, malonic acid, succinic acid, oxydiacetic acid, dimethylmalonic acid, ethylmethylmalonic acid, diethylmalonic acid, 2,2-dimethylsuccinic acid, 2,2-diethylsuccinic acid, 2,2-dimethylglutaric acid, and 1,2,2-trimethyl-1,3-cyclopentanedicarboxylic acid; and unsaturated dicarboxylic acids such as maleic acid, fumaric acid, acetylenedicarboxylic acid, and itaconic acid.

Examples of an aliphatic polycarboxylic acid include tricarboxylic acids such as aconitic acid, 4,4-dimethylaconitic acid, citric acid, isocitric acid, and 3-methylisocitric acid. Examples of an aromatic carboxylic acid include: aromatic monocarboxylic acids such as benzoic acid, 9-anthracenecarboxylic acid, atrolactic acid, anisic acid, isopropylbenzoic acid, salicylic acid, and toluic acid; and aromatic polycarboxylic acids such as phthalic acid, isophthalic acid, terephthalic acid, carboxyphenylacetic acid, and pyromellitic acid. Such a promoter may be used together in expectation of an increase in the catalytic activity of the curing agent and improvement in properties such as the curability and depth curability of the curable composition.

The amount of carboxylic acid is preferably 0.01 to 20 parts by weight, and more preferably 0.1 to 10 parts by weight, for each 100 parts by weight of the organic polymer as the component (A).

The curable composition of the present invention essentially contains a chelating agent having a carbonyl group and/or a salt of the chelating agent as the component (C). Use of the component (C) can solve a problem that the surface of the cured product of the curable composition tends to change its color to yellow gradually in the case that the amidine compound as the component (B) is used as a curing catalyst. In addition, use of the component (C) does not lower the curability which is an important property of the curable composition.

The component (C) is a chelating agent having a carbonyl group , specifically a β-ketoamide, β-ketoanilide, or aminocarboxylic acid, and/or a salt of the chelating agent because they are excellent in suppressing discoloration of the curable composition.

The boiling point of the component (C) is preferably 100°C or higher, more preferably 150°C or higher, still more preferably 200°C or higher, and particularly preferably 250°C or higher. The component (C) having a low boiling point easily evaporates after curing of the curable composition. As a result, the effects of the present invention may not be maintained for a long time.

For the chelating agent having a carbonyl group of the component (C), examples include aminocarboxylic acid compounds such as ethylenediaminetetraacetic acid, nitrilotricetic acid, diethylenetriaminetetraacetic acid, N'-(2-hydroxyethyl)ethylenediamine-N,N,N'-triacetic acid, triethylenetetraaminehexaacetic acid, 1,3-propanediamine-N,N,N',N'-tetraacetic acid, 1,3-diamino-2-hydroxypropane-N,N,N',N'-tetraacetic acid, 2-hydroxyethylimino-diacetic acid, N-(1,2-dihydroxyethyl)glycine, glycoletherdiamine-N,N,N',N'-tetraacetic acid, (1α,2β-cyclohexanediylbisnitrilo)tetraacetic acid, carboxymethylpolyethyleneimine, N,N-bis(carboxymethyl)-L-glutamic acid, and N,N'-ethylenediaminedisuccinic acid.

Among these chelating agents, aminocarboxylic acids are preferable, and ethylenediaminetetraacetic acid, nitrilotriacetic acid, and diethylenetriaminetetraacetic acid are more preferable because they are easily available and excellent in suppressing discoloration of the curable composition.

The salt of a chelating agent having a carbonyl group as the component (C) is not particularly limited. Examples thereof include salts containing the above-mentioned chelating agents having a carbonyl group. More specifically, examples thereof include lithium salts, sodium salts, magnesium salts, aluminum salts, potassium salts, calcium salts, titanium salts, vanadium salts, chromium salts, manganese salts, iron salts, cobalt salts, nickel salts, copper salts, zinc salts, gallium salts, germanium salts, molybdenum salts, palladium salts, silver salts, tin salts, cesium salts, barium salts, osmium salts, platinum salts, gold salts, and bismuth salts.

Among these salts of chelating agents, sodium salts are preferable, and disodium ethylenediaminetetraacetate and tetrasodium ethylenediaminetetraacetate are more preferable because they are easily available and easily handled. These components (C) may be added alone, or may be added in combination to the curable composition.

The amount of the component (C) is preferably 0.1 to 20 parts by weight, more preferably 1.5 to 15 parts by weight, and particularly preferably 3 to 10 parts by weight, for each 100 parts by weight of the organic polymer as the component (A). An amount of less than 0.1 parts by weight of the component (C) gives only an insufficient effect of suppressing discoloration of the cured product. In contrast, an amount of more than 20 parts by weight of the component (C) tends to lower the adhesiveness of the cured product and is economically disadvantageous.

The curable composition of the present invention may optionally contain a silane coupling agent. Here, the silane coupling agent is a compound having a hydrolyzable silicon group and a functional group other than the hydrolyzable silicon group in each molecule. Blending the silane coupling agent in a curable composition gives effects of enhancing the adhesiveness of the resulting cured product to various adherends and removing moisture contained in the curable composition (dehydration). Further, the silane coupling agent may function as a physical-property modifier and a dispersibility modifier for inorganic filler, in addition to exerting the above effects.

The hydrolyzable silicon group in the silane coupling agent is exemplarily represented by formula (3): -SiR³ₐX¹₃₋ₐ in which X¹ is a hydrolyzable group, and specifically, for example, a group previously mentioned as a hydrolyzable group. Among the aforementioned groups, a methoxy group and an ethoxy group are preferable because of their appropriate hydrolysis rate. The number of the hydrolyzable groups in one molecule of the silane coupling agent is preferably two or more, and particularly preferably three of more.

Examples of the functional group other than the hydrolyzable silicon group in the silane coupling agent include a substituted or unsubstituted amino group, mercapto group, epoxy group, carboxyl group, vinyl group, isocyanate group, isocyanurate, and halogen. Among these, the silane coupling agent containing a substituted or unsubstituted amino group is particularly preferable because such a silane couling agent enhances the adhesiveness between the cured product to be provided and an adherend.

Further, a curable composition obtainable by adding the silane coupling agent to the organic polymer as the component (A) is storable for a long time in a good condition because increase in viscosity with time is suppressed.

The silane coupling agent is not particularly limited, and examples thereof include amino silanes such as γ-aminopropyltrimethoxysilane, γ-aminopropyltriethoxysilane, γ-aminopropyltriisopropoxysilane, γ-aminopropylmethyldimethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-(2-aminoethyl)aminoethyl)aminopropyltrimethoxysilane, 3-(N-ethylamino)-2-methylpropyltrimethoxysilane, N-cyclohexylaminomethyltriethoxysilane, and N-phenylaminomethyltrimethoxysilane; ketimine silanes such as N-(1,3-dimethylbutylidene)-3-(triethoxysilyl)-1-propaneamine; isocyanato silanes such as γ-isocyanatopropyltrimethoxysilane and γ-isocyanatopropyltriethoxysilane; mercapto silanes such as γ-mercaptopropyltrimethoxysilane; epoxy silanes such as γ-glycidoxypropyltrimethoxysilane; carboxy silanes such as β-carboxyethyltriethoxysilane; vinyl unsaturated group-containing silanes such as vinyltrimethoxysilane, vinyltriethoxysilane, and γ-methacryloyloxypropylmethyldimethoxysilane; halogen-containing silanes such as γ-chloropropyltrimethoxysilane; and isocyanurate silanes such as tris(3-trimethoxysilylpropyl)isocyanurate. In addition, reaction products of the amino silanes and the epoxy silanes and reaction products of the amino silanes and the isocyanurate silanes are also usable.

In the case that a silane coupling agent is added to the composition, the amount thereof is preferably 0.01 to 20 parts by weight for each 100 parts by weight of the organic polymer (A).

The curable composition of the present invention may optionally contain a plasticizer. The plasticizer adjusts the viscosity and slump property of the curable composition, and adjusts mechanical properties, such as tensile strength and elongation property, of the resulting cured product.

The plasticizer is not particularly limited, and examples thereof include phthalate esters such as dibutyl phthalate, diheptyl phthalate, bis(2-ethylhexyl) phthalate, diisodecyl phthalate, diisononyl phthalate, and butyl benzyl phthalate; non-aromatic dibasic acid esters such as dimethyl malonate, dimethyl succinate, dimethyl glutarate, dimethyl adipate, dimethyl sebacate, dibutyl sebacate, dioctyl adipate, dioctyl sebacate, and isodecyl succinate; aliphatic esters such as methyl valerate, methyl caprylate, methyl caprate, methyl laurate, methyl myristate, methyl palmitate, methyl stearate, methyl oleate, methyl ricinoleate, methyl acetylricinoleate, methyl cocoate, and butyl oleate; phosphate esters such as tricresyl phosphate and tributyl phosphate; trimellitate esters; sulfonate esters such as phenyl pentadecanesulfonate and phenyl hexadecanesulfonate; chlorinated paraffins; hydrocarbon oils such as alkyldiphenyls and partially hydrogenated terphenyls; process oils; and epoxy plasticizers such as epoxidized soybean oil and benzyl epoxystearate.

Among the plasticizers, phthalate ester plasticizers may contribute to production of curable compositions having excellent curability. Among the phthalate ester plasticizers, bis(2-ethylhexyl) phthalate and diisodecyl phthalate are preferable for their easy availability.

Among the plasticizers, aliphatic ester plasticizers having a methylester group may contribute to maintenance of good curability of the curable composition after long-term storage. The aliphatic ester plasticizer having a methylester group preferably contains a primary or secondary carbon atom at the α position of the methylester group because of the strong effect of suppressing curing retardation. Moreover, in order to prevent diffusion of volatile components into the air during indoor use of the curable composition, the plasticizer preferably has a boiling point of 150°C or higher, and more preferably of 200°C or higher. Specifically, preferably used are dimethyl malonate, dimethyl succinate, dimethyl glutarate, dimethyl adipate, dimethyl sebacate, and methyl laurate. Particularly, dimethyl adipate is more preferably used because of its easy availability.

In addition, a polymeric plasticizer may be added. The polymeric plasticizer is not particularly limited, and examples thereof include vinyl polymers obtainable by polymerizing vinyl monomers through various methods; esters of polyalkylene glycols such as diethylene glycol dibenzoate, triethylene glycol dibenzoate, and pentaerythritol esters; polyester plasticizers obtainable from a dibasic acid, such as sebacic acid, adipic acid, azelaic acid, or phthalic acid, and a dihydric alcohol, such as ethylene glycol, diethylene glycol, triethylene glycol, propylene glycol, or dipropylene glycol; polyether polyols such as polyethylene glycols, polypropylene glycols, and polytetramethylene glycols which have a molecular weight of 500 or more, and more preferably of 1000 or more, or polyether derivatives obtainable by substituting a hydroxy group in the above polyether polyols with an ester or ether group; polystyrenes such as polystyrene and poly-α-methylstyrene; polybutadiene; polybutene; polyisobutyrene; butadiene-acrylonitrile; and polychloroprene.

Among these polymeric plasticizers, preferably used are plasticizers highly compatible with the organic polymer as the component (A). Examples thereof include polyethers and vinyl polymers. Polyethers are more preferable because the curable composition has excellent depth curability. Specifically, polypropyrene glycol is particularly preferable.

Further, vinyl polymers are preferable because they are highly compatible with the organic polymer as the component (A) and the cured product to be provided has excellent weather resistance and heat resistance. Among these, acrylic polymers and/or methacrylic polymers are more preferable, and acrylic polymers such as polyacrylic acid alkyl esters are particularly preferable.

The production method of a polyacrylic acid alkyl ester is not particularly limited, and is preferably the living radical polymerization, and more preferably the atom transfer radical polymerization because such methods provide polymers having a narrow molecular weight distribution and a lower viscosity. Also preferable is polymerization by the so-called SGO process in which an acrylic acid alkyl ester compound is continuously bulk-polymerized under high-temperature and high-pressure conditions, as disclosed in JP-A 2001-207157.

The number-average molecular weight of the polymeric plasticizer is preferably 500 to 15,000, or 800 to 10,000, more preferably 1,000 to 8,000, particularly preferably 1,000 to 5,000, and most preferably 1,000 to 3,000. If the molecular weight is too low, the polymeric plasticizer may escape from the cured product to be provided by heat or rain with time. This causes a failure in maintenance of the initial properties for a long time and possibly causes contamination due to dust adhesion or the like. Such a curable composition tends to have poor alkyd coatability. On the other hand, if the molecular weight is too high, the curable composition to be provided is likely to have a high viscosity and be poor in workability.

Though not particularly limited, the molecular weight distribution of the polymeric plasticizer is preferably narrow. Specifically, the molecular weight distribution is preferably less than 1.80, or 1.70 or lower, more preferably 1.60 or lower, still more preferably 1.50 or lower, particularly preferably 1.40 or lower, and most preferably 1.30 or lower.

The number-average molecular weight is determined by end group analysis in the case of polyether polymers and by GPC in the case of other polymers. Further, the molecular weight distribution (Mw/Mn) is determined by GPC (polystyrene equivalent basis).

Though the polymeric plasticizer may or may not contain a reactive silyl group in a molecule, a polymeric plasticizer containing a reactive silyl group is preferable because such a polymeric plasticizer is involved in the curing reaction, which prevents transfer of the plasticizer from the cured product to be provided.

In the polymeric plasticizer having a reactive silyl group, the average number of the reactive silyl groups per molecule is preferably one or less and more preferably 0.8 or less. In the case of adding the plasticizer having a reactive silyl group, particularly an oxyalkylene polymer having a reactive silyl group, the number-average molecular weight thereof is preferably lower than that of the organic polymer as the component (A) for sufficient plasticization.

These plasticizers may be added alone, or may be added in combination. Further, a low-molecular-weight plasticizer and a polymeric plasticizer may be added in combination.

Here, the amount of a phthalate ester plasticizer in the plasticizer component is preferably large because use of the phthalate ester plasticizer among the plasticizers contributes to production of a curable composition having excellent curability. The proportion of the phthalate ester plasticizer in the plasticizer component is preferably 50% by weight or more, more preferably 70% by weight or more, and particularly preferably 100% by weight.

These plasticizers may be added during production of the organic polymer as the component (A).

In the case of adding the plasticizer, the amount of plasticizer is preferably 5 to 150 parts by weight, more preferably 10 to 120 parts by weight, and particularly preferably 20 to 100 parts by weight, for each 100 parts by weight of the organic polymer as the component (A). An amount of less than 5 parts by weight of the plasticizer tends to fail to exert an effect as a plasticizer. An amount of more than 150 parts by weight of the plasticizer tends to lead to insufficient mechanical strength of the cured product to be provided.

In order to produce an adhesiveness-imparting effect, the curable composition of the present invention may optionally contain additives such as epoxy resin, phenol resin, sulfur, alkyl titanates, and aromatic polyisocyanates. The amount of these additives is preferably small. In the case of additing an epoxy resin, the amount thereof is preferably 5 parts by weight or less for each 100 parts by weight of the organic polymer as the component (A).

The curable composition of the present invention may optionally contain a filler. Examples of the filler include, but are not particularly limited to: reinforcing fillers such as fumed silica, precipitated silica, crystalline silica, fused silica, dolomite, silicic anhydride, hydrous silicic acid, and carbon black; heavy calcium carbonate, colloidal calcium carbonate, magnesium carbonate, diatomite, calcined clay, clay, talc, titanium oxide, bentonite, organic bentonite, ferric oxide, fine aluminum powder, flint powder, zinc oxide, activated zinc white, shirasu balloons, glass microballoons, organic microballoons of phenol resin or vinylidene chloride resin, and organic powders such as PVC powder and PMMA powder; and fibrous fillers such as glass fiber and filaments.

In the case that the filler is added, the amount thereof is preferably 1 to 250 parts by weight, and more preferably 10 to 200 parts by weight, for each 100 parts by weight of the organic polymer as the component (A).

In order to achieve a luxurious appearance, the curable composition of the present invention may contain a scaly or granular substance.

The scaly or granular substance is not particularly limited, and examples thereof include materials disclosed in JP-A H9-53063. The particle size thereof is appropriately selected in accordance with materials, patterns, and the like of the exterior walls, and is preferably 0.1 mm or larger.

The amount of scaly or granular substance is preferably 1 to 200 parts by weight for each 100 parts by weight of the curable composition.

Examples of the scaly or granular substance include, but are not particularly limited to, natural materials such as silica sand and mica, synthetic rubbers, synthetic resins, and inorganic materials such as alumina.

The curable composition may optionally contain balloons (preferably having an average particule size of 0.1 mm or larger) for the same purpose.

Also in the case that the curable composition of the present invention contains particles of a cured sealant, the cured product to be provided may have irregularities formed on the surface for improving its appearance. Preferable particle size, amount, material, and the like of the particles of a cured sealant are disclosed in JP-A 2001-115142.

The curable composition of the present invention may optionally contain a silicate.

The silicate is not particularly limited, and examples thereof include tetraalkoxysilanes and partially hydrolyzed condensation products derived therefrom. More specifically, the examples include: tetraalkoxysilanes (tetraalkylsilicates) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, and tetra-t-butoxysilane; and partially hydrolyzed condensation products derived therefrom.

In the case that the silicate is added, the amount thereof is preferably 0.1 to 20 partes by weight and more preferably 0.5 to 10 parts by weight for each 100 parts by weight of the organic polymer as the component (A).

The partially hydrolyzed condensation products of tetraalkoxysilanes are commercially available, for example, under the trade name of methylsilicate 51 and ethylsilicate 40 (products of COLCOAT CO., LTD.). These products may be used as additives.

The curable composition of the present invention may optionally contain a tackifier. The tackifier resin is not particularly limited as long as it is commonly used in a form of solid or liquid at room temperature. Examples thereof include styrene block copolymers and hydrogenated products thereof, phenol resins, modified phenol resins (such as cashew oil modified phenol resins and tall oil modified phenol resins), terpene phenol resins, xylene-phenol resins, cyclopentadiene-phenol resins, coumarone indene resins, rosin resins, rosin ester resins, hydrogenated rosin ester resins, xylene resins, low-molecular-weight polystyrene resins, styrene copolymer resins, petroleum resins (such as C5 hydrocarbon resins, C9 hydrocarbon resins, and C5C9 hydrocarbon copolymer resins), hydrogenated petroleum resins, terpene resins, and DCPD petroleum resins.

In the case that the tackifier is added, the amount thereof is preferably 5 to 1,000 parts by weight for each 100 parts by weight of the organic polymer as the component (A) .

The curable composition of the present invention may optionally contain a solvent or a diluent. The solvent and the diluent are not particularly limited, and examples thereof include aliphatic hydrocarbons, aromatic hydrocarbons, alicyclic hydrocarbons, halogenated hydrocarbons, alcohols, esters, ketones, and ethers. These compounds may be added alone, or may be added in combination.

The curable composition of the present invention may optionally contain a physical-property modifier.

The physical-property modifier is not particularly limited, and examples thereof include: alkylalkoxysilanes such as methyltrimethoxysilane and dimethyldimethoxysilane; alkylisopropenoxysilanes such as dimethyldiisopropenoxysilane; alkoxysilanes having a functional group, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes.

Preferable among physical-property modifiers are ones that generate a compound containing a monovalent silanol group in the molecule via hydrolysis because such modifiers reduce the modulus of the cured product to be provided without increasing the surface stickiness thereof.

The compound that generates a compound having a monovalent silanol group in the molecule via hydrolysis is not particularly limited. Examples thereof include: the compound disclosed in JP-A H5-117521; a compound that is a derivative of an alkyl alcohol and generates an organic silicon compound represented by R₃SiOH, such as trimethylsilanol, via hydrolysis; and a compound that is a derivative of a polyalcohol having three or more hydroxy groups per molecule as disclosed in JP-A H11-241029 and generates an organic silicon compound represented by R₃SiOH, such as trimethylsilanol, via hydrolysis.

The examples further include: a compound that is a derivative of an oxypropylene polymer as disclosed in JP-A H7-258534 and generates an organic silicon compound represented by R₃SiOH, such as trimethylsilanol, via hydrolysis; and a compound having a crosslinkable hydrolyzable silicon-containing group and a silicon group that may generate a compound containing a monovalent silanol group via hydrolysis, as disclosed in JP-A H6-279693.

In the case that the physical-property modifier is added, the amount thereof is preferably 0.1 to 20 parts by weight for each 100 parts by weight of the organic polymer as the component (A).

The curable composition of the present invention may optionally contain a thixotropic agent (anti-sagging agent).

The thixotropic agent is not particularly limited, and examples thereof include: polyamide waxes; hydrogenated castor oil derivatives; and metal soaps such as calcium stearate, aluminum stearate, and barium stearate. The examples further include powdery rubber having a particle size of 10 to 500 µm disclosed in JP-A H11-349916 and the like, and organic fiber disclosed in JP-A 2003-155389 and the like. These thixotropic agents (anti-sagging agents) may be added alone, or may be added in combination.

In the case that the thixotropic agent is added, the amount thereof is preferably 0.1 to 20 parts by weight for each 100 parts by weight of the organic polymer as the component (A).

The curable composition of the present invention may optionally contain a compound having an epoxy group in each molecule. Such an epoxy group-containing compound enhances restorability of the cured product to be provided.

The epoxy group-containing compound is not particularly limited, and examples thereof include: epoxidized unsaturated oils and fats; epoxidized unsaturated fatty acid esters; alicyclic epoxidized compounds; compounds such as epichlorohydrin derivatives; and mixtures thereof.

In the case that the epoxy compound is added, the amount thereof is preferably 50 parts by weight or less for each 100 parts by weight of the organic polymer as the component (A).

The curable composition of the present invention may optionally contain a photocurable substance.

The photocurable substance is not particularly limited, and examples thereof include conventionally known ones such as organic monomers, oligomers, resins, and compositions containing these substances. Specific examples thereof include unsaturated acrylic compounds, polyvinyl cinnamates, and azidized resins.

In the case that the photocurable substance is added, the amount thereof is preferably 0.1 to 20 parts by weight for each 100 parts by weight of the organic polymer as the component (A).

The curable composition of the present invention may optionally contain an oxygen-curable substance.

The oxygen-curable substance is not particularly limited as long as it is a compound having an unsaturated compound which may react with oxygen in the air. Examples thereof include drying oils such as tung oil and linseed oil, and various alkyd resins produced by modification of such compounds; drying oil-modified acrylic polymers, epoxy resins, and silicone resins; liquid polymers such as 1,2-polybutadiene, 1,4-polybutadiene, and C5-C8 diene polymers; and liquid copolymers such as NBR and SBR, which are produced by copolymerizing such a diene compound and a vinyl compound copolymerizable therewith, e.g., acrylonitrile or styrene, such that the diene compound serves as the main component.

In the case that the oxygen-curable substance is added, the amount thereof is preferably 0.1 to 20 parts by weight for each 100 parts by weight of the organic polymer as the component (A).

The curable composition of the present invention may optionally contain an antioxidant.

The antioxidant is not particularly limited, and examples thereof include hindered phenol antioxidants, monophenol antioxidants, bisphenol antioxidants, and polyphenol antioxidants. Among these, hindered phenol antioxidants are preferable. In addition, hindered amine light stabilizers such as TINUVIN 622LD (product of Ciba Specialty Chemicals Inc.) and SANOL LS-770 (product of Sankyo Lifetech Co., Ltd.) are also preferable. Here, specific examples of the antioxidant are also disclosed in JP-A H4-283259 and JP-A H9-194731.

In the case that the antioxidant is added, the amount thereof is preferably 0.1 to 10 parts by weight for each 100 parts by weight of the organic polymer as the component (A) .

The curable composition of the present invention may optionally contain a light stabilizer.

The light stabilizer is not particularly limited, and examples thereof include benzotriazole compounds, hindered amine compounds, and benzoate compounds. Among these, hindered amine light stabilizers are preferable.

In the case that the light stabilizer is added, the amount thereof is preferably 0.1 to 10 parts by weight for each 100 parts by weight of the organic polymer as the component (A). Here, specific examples of the light stabilizer are also disclosed in JP-A H9-194731.

The curable composition of the present invention may optionally contain an ultraviolet absorber.

The ultraviolet absorber is not particularly limited, and examples thereof include benzophenone compounds, benzotriazole compounds, salicylate compounds, substituted tolyl compounds, and metal chelate compounds.

In the case that the ultraviolet absorber is added, the amount thereof is preferably 0.1 to 10 parts by weight for each 100 parts by weight of the organic polymer (A).

The curable composition of the present invention may optionally contain an epoxy resin. The epoxy resin improves adhesiveness of the cured product to be provided, and curable compositions containing the epoxy resin can be suitably used as adhesives, especially adhesives for exterior wall tiles.

The epoxy resin is not particularly limited, and examples thereof include epichlorohydrin-bisphenol A epoxy resin, epichlorohydrin-bisphenol F epoxy resin, novolac epoxy resin, hydrogenated bisphenol A epoxy resin, alicyclic epoxy resins, N,N-diglycidylaniline, N,N-diglycidyl-o-toluidine, triglycidyl isocyanurate, polyalkylene glycol diglycidyl ethers, glycidyl ethers of polyalcohols such as glycerin, hydantoin epoxy resin, and epoxidized products of unsaturated polymers such as petroleum resins.

In the case that the epoxy resin is added, the amount thereof varies in accordance with applications of the curable composition to be provided. For example, in order to enhance the impact resistance, flexibility, toughness, peel strength and other properties of the cured product containing the epoxy resin, the amount of the organic polymer as the component (A) is preferably 1 to 100 parts by weight for each 100 parts by weight of the epoxy resin. On the other hand, in order to enhance the strength of the cured product containing the organic polymer as the component (A), the amount of the epoxy resin is preferably 1 to 200 parts by weight for each 100 parts by weight of the organic polymer as the component (A). Here, the catalytic activity of the amidine compound as the component (B) is likely to be lowered along with increase in the amount of the epoxy resin. Accordingly, the amount of the epoxy resin is preferably small. The amount of the epoxy resin is preferably 50 parts by weight or less, and more preferably 5 parts by weight or less, for each 100 parts by weight of the organic polymer as the component (A). Moreover, it is particularly preferable that the curable composition is substantially free from the epoxy resin.

In the case that the curable composition of the present invention contains the epoxy resin, the curable composition preferably further contains a curing agent for the epoxy resin.

The curing agent for the epoxy resin is not particularly limited as long as it is a compound capable of curing the epoxy resin. Examples thereof include: primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amine-terminated polyethers; tertiary amines such as 2,4,6-tris(dimethylaminomethyl)phenol and tripropylamine, and salts of these tertiary amines; polyamide resins; imidazoles; dicyandiamides; boron trifluoride complex compounds; carboxylic acid anhydrides such as phthalic acid anhydride, hexahydrophthalic acid anhydride, tetrahydrophthalic acid anhydride, dodecenylsuccinic acid anhydride, pyromellitic acid anhydride, and chlorendic acid anhydride; alcohols; phenols; carboxylic acids; and diketone complex compounds of aluminum or zirconium.

Preferable among the curing agents for the epoxy resin are ketimine compounds because they allow production of one-pack type curable compositions. The ketimine compound is stable in the absence of moisture, but is decomposed into a primary amine and a ketone by moisture; the generated primary amine serves as a curing agent for curing the epoxy resin at room temperature. Examples of the ketimine compound include compounds produced via condensation reaction between an amine compound and a carbonyl compound.

The curable composition of the present invention may optionally contain various additives other than the aforementioned additives with the aim of adjusting physical properties of the curable composition or cured product to be provided. Examples of the additives include curability modifiers, radical inhibitors, metal deactivators, antiozonants, phosphorus type peroxide decomposers, lubricants, pigments, blowing agents, repellents for ants, and antifungal agents. Specific examples thereof are disclosed in JP-B H4-69659, JP-B H7-108928, JP-A S63-254149, JP-A S64-22904, and JP-A 2001-72854, and other documents. These additives may be used alone or may be used in combination.

In the case that the curable composition is of one-pack type, since all the formulation ingredients are blended in advance, curing of the composition may proceed during storage if moisture is present in the ingredients. Therefore, a formulation ingredient that contains moisture is preferably dehydrated and dried prior to the addition, or is preferably dehydrated by pressure reduction or the like operation during the blending and kneading.

In the case that the curable composition is of two-pack type, a curing catalyst is not required to be blended in the base mixture including the reactive silyl group-containing organic polymer. Thus, the composition is less likely to cure (gelate) even though some moisture exists in the formulation ingredients; if long-time storage stability is required, however, the formulation ingredients are preferably dehydrated and dried.

Preferable examples of the dehydrating or drying method include: heat drying and vacuum dehydration in the case that the formulation ingredients are solids such as powder; and vacuum dehydration, and dehydration with substances such as synthetic zeolite, active alumina, silica gel, quick lime, and magnesium oxide in the case that the formulation ingredients are liquids. Another preferable example is dehydration by reaction between water in the formulation ingredients and an alkoxysilane compound, an oxazolidine compound, or an isocyanate compound added to the curable composition. Specific examples of the alkoxysilane compound include n-propyltrimethoxysilane, vinyltrimethoxysilane, vinylmethyldimethoxysilane, methylsilicate, ethylsilicate, γ-mercaptopropylmethyldimethoxysilane, γ-mercaptopropylmethyldiethoxysilane, and γ-glycidoxypropyltrimethoxysilane. Specific examples of the oxazolidine compound include 3-ethyl-2-methyl-2-(3-methylbutyl)-1,3-oxazolidine. The addition of an alkoxysilane compound, an oxazolidine compound, or an isocyanate compound improves the storage stability of the curable composition.

In the case of adding an alkoxysilane compound such as vinyltrimethoxysilane, which can react with moisture, for the purpose of drying, the amount thereof is preferably 0.1 to 20 parts by weight for each 100 parts by weight of the organic polymer as the component (A).

The method for preparing the curable composition of the present invention is not particularly limited, and a known method may be employed. Examples thereof include: a method of mixing the formulation ingredients and kneading the mixture using a mixer, a roller, or a kneader at room temperature or under heating; and a method of dissolving the formulation ingredients using a small amount of an appropriate solvent and mixing them.

The curable composition of the present invention forms a three-dimensional network structure by actions of moisture when exposed to the air. Then, the curable composition is cured into a solid having rubber-like elasticity.

### EXAMPLES

The following will specifically describe the present invention referring to non-limitative examples and comparative examples.

### (Synthesis Example 1)

Propylene oxide was polymerized in the presence of polypropylene glycol as an initiator and a zinc hexacyanocobaltate glyme complex catalyst, so that a polypropylene oxide was provided which had a number-average molecular weight of about 28,500 (polystyrene-equivalent molecular weight determined with a TOSOH model HLC-8120 GPC solvent delivery system, a TOSOH model TSK-GEL H type column, and THF as a solvent). Then, a solution of NaOMe in methanol was added in an amount corresponding to 1.2 equivalents relative to hydroxy groups of the produced hydroxy-terminated polypropylene oxide, and the methanol was distilled off. In addition, allyl chloride was added, and thereby each terminal hydroxy group was converted to an allyl group. Unreacted allyl chloride was devolatilized under reduced pressure.

Next, n-hexane (300 parts by weight) and water (300 parts by weight) were added to the resulting unpurified allyl-terminated polypropylene oxide (100 parts by weight) and then the mixture was stirred. The resultant mixture was centrifuged so that the water was removed. Water (300 parts by weight) was further added to the resulting hexane solution and the mixture was stirred. The mixture was then centrifuged again so that the water was removed, and the hexane was devolatilized under reduced pressure. Thereby, an allyl-terminated bifunctional polypropylene oxide having a number-average molecular weight of about 28,500 was produced.

The produced allyl-terminated polypropylene oxide (100 parts by weight) was reacted with triethoxysilane (1.48 parts by weight) for two hours at 90°C in the presence of a solution of a platinum-vinylsiloxane complex in isopropanol (150 ppm, platinum content: 3 wt%) as a catalyst. Thus, a triethoxysilyl-terminated polypropylene oxide was prepared. As a result of ¹H-NMR measurement (measured in a CDCl₃ solvent with JNM-LA400 produced by JEOL Ltd.), the average number of terminal triethoxysilyl groups per molecule was found to be 1.6.

The produced triethoxysilyl-terminated polypropylene oxide (100 parts by weight) was mixed with methanol (20 parts by weight) for two hours at 70°C in the presence of a solution of hydrochloric acid in methanol (0.24 wt%, hydrochloric acid content: 0.5 wt%) as a catalyst, so that the terminal triethoxysilyl groups were converted to trimethoxysilyl groups. Finally, the methanol was devolatilized under reduced pressure. Thus, a trimethoxysilyl-terminated polyoxypropylene polymer (A-1) was prepared. As a result of ¹H-NMR measurement by the same method as mentioned above, the average number of terminal trimethoxysilyl groups per molecule was found to be 1.6.

### (Mixing Example 1)

To 1-phenylguanidine (product of Nippon Carbide Industries Co., Inc.), N-n-butylbenzenesulfonamide (product of Fuji Amide Chemical Co., Ltd., trade name: TOPCIZER No. 7) was added. The mixture was stirred well and then left in an oven at 80°C for 30 minutes, whereby a yellow, transparent liquid (1-phenylguanidine solution) having a 1-phenylguanidine concentration of 45 wt% was produced.

### (Example 1)

The following materials were weighed, mixed, and sufficiently kneaded: the trimethoxysilyl-terminated polyoxypropylene polymer (A-1) prepared in Synthesis Example 1 (100 parts by weight); surface-treated colloidal calcium carbonate (120 parts by weight, trade name: HAKUENKA CCR, product of Shiraishi Kogyo Kaisha, Ltd.); a diisodecyl phthalate plasticizer (45 parts by weight, trade name: DIDP, product of J-PLUS Co., Ltd.); dimethyl adipate (10 parts by weight, trade name: DMA, product of Daihachi Chemical Industry Co., Ltd.); titanium oxide as a white pigment (20 parts by weight, trade name: TIPAQUE R-820, product of Ishihara Sangyo Kaisha, Ltd.); an anti-sagging agent (2 parts by weight, trade name: DISPARLON 6500, product of Kusumoto Chemicals, Ltd.); a salicylate ultraviolet absorber (1 part by weight, trade name: Sumisorb 400, product of Sumitomo Chemical Co., Ltd.); a hindered amine light stabilizer (1 part by weight, trade name: SANOL LS-770, product of Sankyo Lifetech Co., Ltd.); and ethylenediaminetetraacetic acid (5 parts by weight, product of Tokyo Chemical Industry Co., Ltd.). Then, the mixture was passed through a three-roll paint mill three times for sufficient dispersion. Next, the mixture was dehydrated under reduced pressure for two hours at 120°C, and then cooled down to 50°C or lower. Thereafter, the following materials were added to the mixture: vinyltrimethoxysilane as a dehydrating agent (3 parts by weight, trade name: A-171, product of Momentive Performance Materials Inc.); N-β-(aminoethyl)-γ-aminopropyltrimethoxysilane (1.5 parts by weight, trade name: A-1122, product of Momentive Performance Materials Inc.) and γ-aminopropyltrimethoxysilane (1.5 parts by weight, trade name: A-1110, product of Momentive Performance Materials Inc.) as adhesiveness-imparting agents; and 1-(o-tolyl)biguanide as a curing catalyst (3 parts by weight, product of Tokyo Chemical Industry Co., Ltd.). The mixture was then kneaded in a state substantially free from moisture. Thereafter, the mixture was hermetically packed in a cartridge that was a moistureproof container. Thus, a one-component type curable composition was prepared.

### (Example 2)

A curable composition was prepared in the same manner as in Example 1, except that the organic polymer in Example 1 was changed to SPUR+ 1015LM (product of Momentive Performance Materials Inc.).

### (Example 3)

A curable composition was prepared in the same manner as in Example 1, except that the placticizer in Exmaple 1 was changed to a diisodecyl phthalate plasticizer (55 parts by weight).

### (Example 4)

A curable composition was prepared in the same manner as in Example 3, except that the placticizer in Exmaple 3 was changed to polypropylene glycol having a molecular weight of 3,000 (trade name: Actcol P-23, product of Mitsui Takeda Chemicals Inc.).

### (Example 5)

A curable composition was prepared in the same manner as in Example 3, except that the placticizer in Exmaple 3 was changed to diisononylcyclohexane dicarboxylate (trade name: HEXAMOLL DINCH, product of BASF).

### (Example 6)

A curable composition was prepared in the same manner as in Example 1, except that the amidine compound in Example 1 was changed to the 1-phenylguanidine solution (3.3 parts by weight) obtained in Mixing Example 1.

### (Example 7)

A curable composition was prepared in the same manner as in Example 6, except that the amount of ethylenediaminetetraacetic acid in Example 6 was changed to 3.2 parts by weight.

### (Example 8)

A curable composition was prepared in the same manner as in Example 6, except that the amount of ethylenediaminetetraacetic acid in Example 6 was changed to 1.6 parts by weight.

### (Example 9)

A curable composition was prepared in the same manner as in Example 6, except that disodium ethylenediaminetetraacetate (product of Tokyo Chemical Industry Co., Ltd.) was used instead of ethylenediaminetetraacetic acid in Example 6.

### (Example 10)

A curable composition was prepared in the same manner as in Example 6, except that tetrasodium ethylenediaminetetraacetate (product of Tokyo Chemical Industry Co., Ltd.) was used instead of ethylenediaminetetraacetic acid in Example 6.

### (Comparative Example 1)

A curable composition was prepared in the same manner as in Example 1, except that ethylenediaminetetraacetic acid in Example 1 was not used.

### (Comparative Example 2)

A curable composition was prepared in the same manner as in Examples 6 to 10, except that various chelating agents or salts thereof in Examples 6 to 10 were not used.

### (Surface curing time)

Each of the curable compositions was spread to a thickness of about 3 mm with a spatula at 23°C and 50%RH. The surface of the curable composition was gently touched with a microspatula from time to time, and the time required for the composition to no longer stick to the microspatula was determined.

### (Evaluation of surface color of cured product)

Each of the cured products was measured for the color difference with a colorimeter (model number CR-300) produced by Minolta Camera Co., Ltd., in accordance with JIS K 5600-4-5. After white calibration, the color difference on the surface of the cured product was measured in the color space mode of Δ(L*a*B*). In this manner, the YI value of the surface of the cured product was determined. A larger YI value shows higher yellowness. Also, the color of the surface of the cured product was visually observed and the color was recorded.

### (Test with sunshine weather meter)

Each of the curable compositions was filled into a mold having a thickness of about 3 mm at a constant temperature of 23°C and a constant humidity of 50%RH. The surface of the composition was smoothed out, and a cured product was obtained. The cured product was aged for three days at 23°C and 50%RH and for four days at 50°C. Thereafter, the cured product was put in a sunshine carbon arc lamp accelerated weather meter (accelerated weathering instrument produced by Suga Test Instruments Co., Ltd., model number S80). A test was performed for 60 hours under the conditions of a black panel temperature of 63°C, a temperature of 83°C, a humidity of 50%, and a water spray time of 18 minutes out of 120 minutes, and then the surface color of the cured product was evaluated.

### (Test with super xenon weather meter)

An about 3 mm thick cured product sample was produced by the same method as the above method, and was aged at 23°C and 50%RH for three days and then at 50°C for four days. The sample was then put in a super xenon weather meter (accelerated weathering instrument produced by Suga Test Instruments Co., Ltd., model number SX75). The sample was exposed to a 7.5-kW water-cooled xenon arc lamp for 260 hours under the conditions of an irradiance of 150W/m², a black panel temperature of 83°C, and a humidity of 50%. Then, the surface color of the cured product was evaluated.

**[Table 1]**

| | | Examples | | | | | | | | | | Comparative Examples | |
|---|---|---|---|---|---|---|---|---|---|---|---|---|---|
| | | 1 | 2 | 3 | 4 | 5 | 6 | 7 | 8 | 9 | 10 | 1 | 2 |
| (A) Silyl group-containing organic polymer | A-1 | 100 | | 100 | 100 | 100 | 100 | 100 | 100 | 100 | 100 | 100 | 100 |
| | SPUR+ 1015LM | | 100 | | | | | | | | | | |
| Calcium carbonate | HAKUENKA CCR | 120 | 120 | 120 | 120 | 120 | 120 | 120 | 120 | 120 | 120 | 120 | 120 |
| Plasticizer | DIDP | 45 | 45 | 55 | | | 45 | 45 | 45 | 45 | 45 | 45 | 45 |
| | Actcol P-23 | | | | 55 | | | | | | | | |
| | HEXAMOLL DINCH | | | | | 55 | | | | | | | |
| | DMA | 10 | 10 | | | | 10 | 10 | 10 | 10 | 10 | 10 | 10 |
| Pigment | TIPAQUE R-820 | 20 | 20 | 20 | 20 | 20 | 20 | 20 | 20 | 20 | 20 | 20 | 20 |
| Anti-sagging agent | DISPARLON 6500 | 2 | 2 | 2 | 2 | 2 | 2 | 2 | 2 | 2 | 2 | 2 | 2 |
| Ultraviolet absorber | Sumisorb 400 | 1 | 1 | 1 | 1 | 1 | 1 | 1 | 1 | 1 | 1 | 1 | 1 |
| Light stabilizer | SANOL LS770 | 1 | 1 | 1 | 1 | 1 | 1 | 1 | 1 | 1 | 1 | 1 | 1 |
| (C) Carbonyl group-containing chelating agent or its salt | Ethylenediaminetetraacetic acid | 5 | 5 | 5 | 5 | 5 | 5 | 3.2 | 1.6 | | | | |
| | Disodium ethylenediamine tetraacetate | | | | | | | | | 5 | | | |
| | Tetrasodium ethylenediamine tetraacetate | | | | | | | | | | 5 | | |
| Dehydrating agent | A-171 | 3 | 3 | 3 | 3 | 3 | 3 | 3 | 3 | 3 | 3 | 3 | 3 |
| Adhesiveness-imparting agent | A-1122 | 1.5 | 1.5 | 1.5 | 1.5 | 1.5 | 1.5 | 1.5 | 1.5 | 1.5 | 1.5 | 1.5 | 1.5 |
| | A-1110 | 1.5 | 1.5 | 1.5 | 1.5 | 1.5 | 1.5 | 1.5 | 1.5 | 1.5 | 1.5 | 1.5 | 1.5 |
| (B) Amidine compond | 1-(o-tolyl)biguanide | 3 | 3 | 3 | 3 | 3 | | | | | | 3 | |
| | 1-phenylguanidine solution (45 wt%) | | | | | | 3.3 | 3.3 | 3.3 | 3.3 | 3.3 | | 3.3 |
| Surface curing time (minutes) | | 46 | 30 | 47 | 60 | 46 | 34 | 17 | 35 | 29 | 34 | 41 | 31 |
| Initial cured product surface (after aging of 3 days at 23°C and 4 days at 50°C) | YI value | +7.4 | +6.2 | +6.5 | +5.8 | +6.0 | +9.6 | +4.6 | +4.6 | +9.5 | +10.8 | +4.6 | +4.8 |
| | Visually observed color | White | White | White | White | White | White | White | White | White | White | White | White |
| Cured product surface after 60-hour irradiation with sunshine weather meter | YI value | +7.9 | - | - | - | - | +8.3 | +10.5 | +14.4 | +12.0 | +12.7 | +11.0 | +19.2 |
| | Visually observed color | White | - | - | - | - | White | White | White | White | White | White | Slightly yellow |
| Cured product surface after 26D-hour irradiation with super xenon weather meter | YI value | +9.1 | +18.4 | +12.6 | +14.0 | +16.1 | +8.8 | +12.1 | +16.0 | +18.9 | +21.4 | +30.7 | +41.0 |
| | Visually observed color | White | Slightly yellow | White | White | Slightly yellow | White | White | Slightly yellow | Slightly yellow | Slightly yellow | Yellow | Yellow |

As shown in Table 1, addition of the chlating agent or its salt defined in the present invention solves yellowing of the cured product surface caused by the amidine compound used as a curing catalyst. In addition, with respect to the curability of the curable composition, fine surface curing time is maintained even with the chelating agent or its salt.

### INDUSTRIAL APPLICABILITY

The curable composition of the present invention may be suitably used in applications such as pressure-sensitive adhesives; sealants for uses such as buildings, ships, automobiles, and roads; adhesives; impression materials; vibration-proof materials; damping materials; soundproof materials; expanded/foamed materials; coating compositions; and spray coatings. The curable composition is more preferably used in such applications as sealants and adhesives because the cured product to be provided is excellent in flexibility and adhesiveness.

The curable composition of the present invention may also be used in various applications such as electric and electronic part materials such as solar cell backside sealants; electrical insulating materials such as insulating coating materials for wires and cables; elastic adhesives; contact adhesives; spray sealants; crack repair materials; tiling adhesives; powder coating compositions; casting materials; rubber materials for medical use; pressure-sensitive adhesives for medical use; sealants for medical devices; food packaging materials; joint sealants for siding boards and other exterior materials; coating materials; primers; electromagnetic-wave-shielding conductive materials and thermally conductive materials; hot melt materials; potting agents for electrics and electronics; films; gaskets; various molding materials; rustproof and waterproof sealants for wired glass and laminated-glass edges (cut portions); and liquid sealants for use in automotive parts, electrical machinery parts, various machinery parts, and the like.

Further, the curable composition may also be used as various sealing compositions and adhesive compositions because it, either alone or with the aid of a primer, can adhere to a wide range of substrates such as glass, ceramics, wood, metals, and molded resin products.

The curable composition of the present invention may also be used as interior panel adhesives, exterior panel adhesives, tiling adhesives, stone pitching adhesives, ceiling finishing adhesives, floor finishing adhesives, wall finishing adhesives, vehicle panel adhesives, adhesives for assembly of electric/electronic/precision devices, direct glazing sealants, double glazing sealants, sealants for SSG systems, and working joint sealants for buildings.

## Claims

1. A non-organotin curable composition, comprising:
(A) an organic polymer having a silyl group crosslinkable by siloxane bond formation;
(B) an amidine compound; and
(C) a chelating agent having a carbonyl group and/or a salt of the chelating agent,
wherein the component (C) is at least one selected from the group consisting of a β-ketoamide, a β-ketoanilide, an aminocarboxylic acid, and salts of these compounds.

2. The non-organotin curable composition according to claim 1,
wherein the silyl group in the component (A) includes a group represented by formula (1):
-SiX₃ (1)
wherein X represents a hydroxy group or a hydrolyzable group, and three Xs may be the same as or different from each other.

3. The non-organotin curable composition according to claim 1 or 2,
wherein the component (A) has a main chain skeleton of at least one selected from the group consisting of a polyoxyalkylene polymer, a saturated hydrocarbon polymer, and a (meth)acrylate ester polymer.

4. The non-organotin curable composition according to claim 3,
wherein the polyoxyalkylene polymer is a polyoxypropylene polymer.

5. The non-organotin curable composition according to any one of claims 1 to 4,
wherein the component (B) is an amidine compound having a melting point of 23°C or higher.

6. The non-organotin curable composition according to any one of claims 1 to 5,
wherein the component (B) is a guanidine compound.

7. The non-organotin curable composition according to claim 6,
wherein the guanidine compound is represented by formula (2):
R¹N = C (NR¹₂)₂ (2)
wherein any one of five R¹s is an organic group, and each of the remaining four R¹s is independently a hydrogen atom, a saturated hydrocarbon group, -C(=NR²)-NR²₂ in which each of three R²s is independently a hydrogen atom or a saturated hydrocarbon group, or =C(-NR²₂)₂ in which each of four R²s is independently a hydrogen atom or a saturated hydrocarbon group.

8. The non-organotin curable composition according to claim 7,
wherein the guanidine compound is represented by formula (2) in which any one of five R¹s is an aryl group.

9. The non-organotin curable composition according to any one of claims 1 to 8,
wherein the component (C) is at least one selected from the group consisting of aminocarboxylic acids and salts of these compounds.

10. The non-organotin curable composition according to any one of claims 1 to 9,
wherein the component (C) is at least one selected from the group consisting of ethylenediaminetetraacetic acid, nitrilotriacetic acid, diethylenetriaminetetraacetic acid, N'-(2-hydroxyethyl)ethylenediamine-N,N,N'-triacetic acid, triethylenetetraminehexaacetic acid, 1,3-propanediamine-N,N,N',N'-tetraacetic acid, 1,3-diamino-2-hydroxypropane-N,N,N',N'-tetraacetic acid, 2-hydroxyethylimino-diacetic acid, N-(1,2-dihydroxyethyl)glycine, glycoletherdiamine-N,N,N',N'-tetraacetic acid, (1α,2β-cyclohexanediylbisnitrilo)tetraacetic acid, and salts of these compounds.

11. A sealant, comprising the non-organotin curable composition according to any one of claims 1 to 10.

12. An adhesive, comprising the non-organotin curable composition according to any one of claims 1 to 10.

13. A cured product, which is produced from the non-organotin curable composition according to any one of claims 1 to 10.

## Patentansprüche

1. Nichtzinnorganische härtbare Zusammensetzung, umfassend:
(A) ein organisches Polymer mit einer Silylgruppe, die durch die Bildung von Siloxanbindungen vernetzbar ist,
(B) eine Amidinverbindung und
(C) einen Chelatbildner mit einer Carboxylgruppen und/oder einem Salz des Chelatbildners,
wobei der Bestandteil (C) wenigstens einer ist, der aus der aus einem β-Ketoamid, einem β-Ketoanilid, einer Aminocarbonsäure und Salzen dieser Verbindungen bestehenden Gruppe ausgewählt ist.

2. Nichtzinnorganische härtbare Zusammensetzung nach Anspruch 1,
wobei die Silylgruppe in dem Bestandteil (A) eine durch die Formel (1) dargestellte Gruppe aufweist:
-SiX₃ (1)
wobei X für eine Hydroxygruppe oder eine hydrolysierbare Gruppe steht, und die drei X gleich oder verschieden sein können.

3. Nichtzinnorganische härtbare Zusammensetzung nach Anspruch 1 oder 2,
wobei der Bestandteil (A) ein Hauptkettengerüst von wenigstens einem, der aus der aus einem Polyoxyalkylenpolymer, einem gesättigten Kohlenwasserstoffpolymer und einem (Meth)acrylatesterpolymer bestehenden Gruppe ausgewählt ist, aufweist.

4. Nichtzinnorganische härtbare Zusammensetzung nach Anspruch 3,
wobei das Polyoxyalkylenpolymer ein Polyoxypropylenpolymer ist.

5. Nichtzinnorganische härtbare Zusammensetzung nach einem der Ansprüche 1 bis 4,
wobei der Bestandteil (B) eine Amidinverbindung mi einem Schmelzpunkt von 23 °C oder höher ist.

6. Nichtzinnorganische härtbare Zusammensetzung nach einem der Ansprüche 1 bis 5,
wobei der Bestandteil (B) eine Guanidinverbindung ist.

7. Nichtzinnorganische härtbare Zusammensetzung nach Anspruch 6,
wobei die Guanidinverbindung durch die Formel (2) dargestellt ist:
R¹N = C(NR¹₂)₂ (2)
wobei ein beliebiges der fünf R¹ eine organische Gruppe ist und jedes der übrigen vier R¹ unabhängig ein Wasserstoffatom, eine gesättigte Kohlenwasserstoffgruppe, -C(=NR²)-NR²₂, wobei jedes der drei R² unabhängig ein Wasserstoffatom oder eine gesättigte Kohlenwasserstoffgruppe ist, oder =C(-NR²₂)₂ ist, wobei jedes der vier R² unabhängig ein Wasserstoffatom oder eine gesättigte Kohlenwasserstoffgruppe ist.

8. Nichtzinnorganische härtbare Zusammensetzung nach Anspruch 7,
wobei die Guanidinverbindung durch die Formel (2) dargestellt ist, bei der ein beliebiges der fünf R¹ eine Arylgruppe ist.

9. Nichtzinnorganische härtbare Zusammensetzung nach einem der Ansprüche 1 bis 8,
wobei der Bestandteil (C) wenigstens einer ist, der aus der aus Aminocarbonsäuren und Salzen dieser Verbindungen bestehenden Gruppe ausgewählt ist.

10. Nichtzinnorganische härtbare Zusammensetzung nach einem der Ansprüche 1 bis 9,
wobei der Bestandteil (C) wenigstens einer ist, der aus der aus Ethylendiamintetraessigsäure, Nitrilotriessigsäure, Diethylentriamintetraessigsäure, N'-(2-Hydroxyethyl)ethylendiamin-N,N,N'-Triessigsäure, Triethylentetraminhexaessigsäure, 1,3-Propandiamin-N,N,N',N'-Tetraessigsäure, 1,3-Diamino-2-Hydroxypropan-N,N,N',N'-Tetraessigsäure, 2-Hydroxyethylimino-Diessigsäure, N-(1,2-Dihydroxyethyl)glycin, Glycoletherdiamin-N,N,N',N'-Tetraessigsäure, (1α,2β-Cyclohexandiylbisnitrilo)tetraessigsäure und Salzen dieser Verbindungen bestehenden Gruppe ausgewählt ist.

11. Dichtstoff, umfassend die nichtzinnorganische härtbare Zusammensetzung nach einem der Ansprüche 1 bis 10.

12. Klebstoff, umfassend die nichtzinnorganische härtbare Zusammensetzung nach einem der Ansprüche 1 bis 10.

13. Gehärtetes Produkt, das aus der nichtzinnorganischen härtbaren Zusammensetzung nach einem der Ansprüche 1 bis 10 hergestellt ist.

## Revendications

1. Composition durcissable non-organostannique, comprenant :
(A) un polymère organique présentant un groupe silyle réticulable par formation de liaison siloxane ;
(B) un composé amidine ; et
(C) un agent chélatant présentant un groupe carbonyle et/ou un sel de l'agent chélatant,
dans laquelle le constituant (C) est au moins un choisi dans le groupe consistant en un β-cétoamide, un β-cétoanilide, un acide aminocarboxylique, et des sels de ces composés.

2. Composition durcissable non-organostannique selon la revendication 1,
dans laquelle le groupe silyle dans le constituant (A) inclut un groupe représenté par la formule (1) :
-SiX₃ (1)
dans laquelle X représente un groupe hydroxy ou un groupe hydrolysable, et les trois X peuvent être identiques ou différents les uns des autres.

3. Composition durcissable non-organostannique selon la revendication 1 ou 2,
dans laquelle le constituant (A) présente un squelette de chaîne principale d'au moins un choisi dans le groupe consistant en un polymère polyoxyalkylène, un polymère hydrocarboné saturé, et un polymère d'ester de (méth)acrylate.

4. Composition durcissable non-organostannique selon la revendication 3,
dans laquelle le polymère polyoxyalkylène est un polymère polyoxypropylène.

5. Composition durcissable non-organostannique selon l'une quelconque des revendications 1 à 4,
dans laquelle le constituant (B) est un composé amidine présentant un point de fusion de 23°C ou supérieur.

6. Composition durcissable non-organostannique selon l'une quelconque des revendications 1 à 5,
dans laquelle le constituant (B) est un composé guanidine.

7. Composition durcissable non-organostannique selon la revendication 6,
dans laquelle le composé guanidine est représenté par la formule (2) :
R¹N = C(NR¹₂)₂ (2)
dans laquelle l'un quelconque des cinq R¹ est un groupe organique, et chacun des quatre R¹ restants est indépendamment un atome d'hydrogène, un groupe hydrocarboné saturé, -C(=NR²)-NR²₂ dans laquelle chacun des trois R² est indépendamment un atome d'hydrogène ou un groupe hydrocarboné saturé, ou =C(-NR²₂)₂ dans laquelle chacun des quatre R² est indépendamment un atome d'hydrogène ou un groupe hydrocarboné saturé.

8. Composition durcissable non-organostannique selon la revendication 7,
dans laquelle le composé guanidine est représenté par la formule (2) dans laquelle l'un quelconque des cinq R¹ est un groupe aryle.

9. Composition durcissable non-organostannique selon l'une quelconque des revendications 1 à 8,
dans laquelle le constituant (C) est au moins un choisi dans le groupe consistant en acides aminocarboxyliques et sels de ces composés.

10. Composition durcissable non-organostannique selon l'une quelconque des revendications 1 à 9,
dans laquelle le constituant (C) est au moins un choisi dans le groupe consistant en acide éthylènediaminetétraacétique, acide nitrilotriacétique, acide diéthylènetriaminetétraacétique, acide N'-(2-hydroxyéthyl)éthylènediamine-N,N,N'-triacétique, acide triéthylène-tétraminehexaacétique, acide 1,3-propanediamine-N,N,N',N'-tétraacétique, acide 1,3-diamino-2-hydroxypropane-N,N,N',N'-tétraacétique, acide 2-hydroxyéthylimino-diacétique, N-(1,2-dihydroxyéthyl)glycine, acide glycolétherdiamine-N,N,N',N'-tétraacétique, acide (1α, 2β-cyclohexane-diylbisnitrilo)tétraacétique, et sels de ces composés.

11. Agent de scellement, comprenant la composition durcissable non-organostannique selon l'une quelconque des revendications 1 à 10.

12. Adhésif, comprenant la composition durcissable non-organostannique selon l'une quelconque des revendications 1 à 10.

13. Produit durci, qui est produit à partir de la composition durcissable non-organostannique selon l'une quelconque des revendications 1 à 10.
